# EUROPÄISCHE PATENTSCHRIFT

(11) **EP 3 568 613 B1**
(45) Veröffentlichungstag und Bekanntmachung des Hinweises auf die Patenterteilung: **16.03.2022**
(21) Anmeldenummer: 17817745.7
(22) Anmeldetag: 18.12.2017
(51) Int. Cl.: F16H 45/02

(54) **HYDRODYNAMISCHE KOPPLUNGSANORDNUNG**
HYDRODYNAMIC COUPLING ARRANGEMENT
DISPOSITIF DE COUPLAGE HYDRODYNAMIQUE

(30) Priorität: 16.01.2017 DE 102017200552
(43) Veröffentlichungstag der Anmeldung: 20.11.2019
(73) Patentinhaber: ZF Friedrichshafen AG, 88046 Friedrichshafen (DE)
(72) Erfinder: SCHÖNEKÄS, Jens, 97506 Grafenrheinfeld (DE); MENCHER, Georg, 97493 Bergrheinfeld (DE)
(74) Vertreter: ZF Friedrichshafen AG
(86) Internationale Anmeldenummer: PCT/EP2017/083208
(87) Internationale Veröffentlichungsnummer: WO 2018/130377

(56) Entgegenhaltungen:
- EP-A1- 1 830 107
- DE-A1-102007 014 311
- US-A1- 2004 172 936
- US-A1- 2014 137 547

## Beschreibung

Die vorliegende Erfindung betrifft eine hydrodynamische Kopplungsanordnung mit einem Gehäuse, welches an Druckmittelleitungen zur Ein- oder Ableitung von Druckmittel wenigstens in einen Druckraum angeschlossen ist, der mittels eines Kolbens einer Kupplungseinrichtung gegenüber einem in dem Gehäuse ebenfalls vorgesehenen Torusraum eines hydrodynamischen Kreises zumindest weitgehend abgedichtet ist, wobei zur axial verlagerbaren Aufnahme einer radial inneren Kolbennabe des Kolbens der Kupplungseinrichtung ein relativ zum Gehäuse drehbarer Aufnahmebereich und zur Herstellung zumindest einer Strömungsverbindung zwischen wenigstens einer Druckmittelleitung und dem Druckraum ein relativ zum Gehäuse drehbarer Durchlass in einem Durchlassbereich vorgesehen ist, und der Aufnahmebereich ebenso wie der Durchlassbereich in Drehverbindung zu einer eine Strömung von Druckmittel im Druckraum beeinflussenden Verzögerungseinrichtung steht, wobei die Strömung des Druckmittels nach Durchgang durch den Durchlassbereich in den Druckraum gelangt.

Eine derartige hydrodynamische Kopplungsanordnung, ausgebildet als hydrodynamischer Drehmomentwandler, ist durch die US 2014/0137547 A1 bekannt. Das um eine Zentralachse drehbare Gehäuse dieser Kopplungsanordnung verfügt an seiner Antriebsseite über eine Gehäusewandung und an seiner Abtriebsseite über ein Pumpenrad, das zusammen mit einem Turbinenrad und einem axial zwischen Pumpenrad und Turbinenrad angeordneten Leitrad einen hydrodynamischen Kreis bildet, der Teil eines Torusraumes ist. Eine Turbinenradnabe ist ebenso wie eine axial zwischen dieser Turbinenradnabe und der Gehäusewandung angeordnete Druckscheibe mit einer nicht gezeigten Abtriebswelle verbunden. Einer derartigen Abtriebswelle sind üblicherweise Druckmittelleitungen zugeordnet, von denen eine über einen Durchlassbereich, gebildet durch Ausnehmungen in der Druckscheibe, in einen Druckraum führt, der sich axial zwischen der Gehäusewandung und dem Kolben der Kupplungseinrichtung befindet.

Die den Durchlassbereich bildenden Ausnehmungen in der Druckscheibe sind derart ausgelegt, dass deren Erstreckungslänge eine Reduzierung der Strömungsgeschwindigkeit erlaubt, was zur Minderung von Turbulenzen und zur Erhöhung der Durchflussrate führt. Die Druckscheibe ist demnach als Verzögerungseinrichtung für die den Durchlassbereich passierende Strömung wirksam.

Eine weitere derartige Verzögerungseinrichtung an einer hydrodynamischen Kopplungsanordnung ist aus der US 2004/0172936 A1 bekannt, wobei diese Verzögerungseinrichtung gemäß Fig. 2 oder 3 durch Befestigung an der Turbinennabe über eine drehfeste Verbindung mit einer Abtriebswelle verfügt, und damit annähernd mit Abtriebsdrehzahl rotiert. Die Verzögerungseinrichtung ist scheibenförmig ausgebildet, und weist einen Durchlassbereich für Strömung in Form von Ausnehmungen auf. Bei dieser Verzögerungseinrichtung ist der Kolben einer Kupplungseinrichtung an der Turbinennabe aufgenommen, und steht damit nicht unmittelbar in Verbindung mit der Verzögerungseinrichtung.

Eine anders aufgebaute hydrodynamische Kopplungsanordnung, ausgebildet als hydrodynamischer Drehmomentwandler, ist durch die DE 10 2007 014 311 A1 bekannt. Das um eine Zentralachse drehbare Gehäuse dieser Kopplungsanordnung bildet an seiner Abtriebsseite ein Pumpenrad aus, das zusammen mit einem Turbinenrad und einem axial zwischen Pumpenrad und Turbinenrad angeordneten Leitrad einen hydrodynamischen Kreis bildet. Das Turbinenrad ist an einem Torsionsschwingungsdämpfer befestigt, dessen Torsionsschwingungsdämpfernabe über eine erste Verzahnung mit einer als Abtrieb der hydrodynamischen Kopplungsanordnung wirksamen Getriebeeingangswelle drehfest verbunden ist, und über eine zweite Verzahnung mit der Versorgungsnabe. Die Getriebeeingangswelle weist Druckmittelleitungen auf, von denen eine zentrale erste Druckmittelleitung zum Durchlassbereich führt, der in einer Versorgungsnabe ausgebildet ist, während eine radial außerhalb der zentralen ersten Druckmittelleitung verlaufende zweite Druckmittelleitung zu einem vom Durchlassbereich der Versorgungsnabe axial beabstandeten Verbindungsbereich führt. Der Durchlassbereich mündet in den Druckraum, der sich axial zwischen einer antriebsseitigen Gehäusewandung und dem Kolben der Kupplungseinrichtung befindet, und der Verbindungsbereich in einen Zwischenraum, der axial zwischen dem Kolben der Kupplungseinrichtung und einer das Gehäuse radial unterteilenden Trennwandung verläuft. Die vom Zwischenraum abgewandte Seite der Trennwandung grenzt an einen den hydrodynamischen Kreis, den Torsionsschwingungsdämpfer sowie Teile der Kupplungseinrichtung aufnehmenden Torusraum.

Da die Trennwandung drehfest mit dem Gehäuse verbunden ist, rotiert diese mit Gehäusedrehzahl um die Zentralachse, und auch der Kolben der Kupplungseinrichtung rotiert annähernd mit Gehäusedrehzahl, da die radial äußere Abdichtung des Kolbens aufgrund ihres im Vergleich zur radial inneren Abdichtung des Kolbens großen Radius eine deutlich höhere Mitnahmewirkung erzielt. Ein im Druckraum sowie im Zwischenraum enthaltenes Druckmittel wird somit im Wesentlichen mit der Antriebsdrehzahl beaufschlagt, so dass diesbezüglich vergleichbare Druckbedingungen beidseits des Kolbens vorliegen, was sich bei einem Ein- oder Ausrückvorgang der Kupplungseinrichtung vorteilhaft bemerkbar macht. Allerdings wird dieser Vorteil nur aufgrund der Trennwandung erzielt, welche zum einen die Anzahl der Bauteile der Kopplungsanordnung erhöht, und zum anderen deren axiale Ausdehnung vergrößert.

Würde bei der bekannten hydrodynamischen Kopplungsanordnung auf die Trennwandung verzichtet, dann würde der Torusraum unmittelbar an den Kolben der Kupplungseinrichtung heranreichen. Da wesentliche im Torusraum enthaltene Elemente, wie das Turbinenrad und der Ausgang des Torsionsschwingungsdämpfers, im Wesentlichen mit Abtriebsdrehzahl betrieben werden, würde das im Torusraum enthaltene Druckmittel im Wesentlichen mit Abtriebsdrehzahl beaufschlagt. Im Gegensatz dazu würden im Druckraum keine geänderten Bedingungen vorliegen, so dass dort das enthaltene Druckmittel weiterhin im Wesentlichen mit Antriebsdrehzahl beaufschlagt ist. Unter der Voraussetzung einer offenen Kupplungseinrichtung ist aufgrund der unterschiedlichen Rotationsgeschwindigkeiten des Druckmittels in Druckraum und Torusraum ein erhebliches Druckgefälle festzustellen, das zu einer ungewollten Axialverlagerung des Kolbens führen kann. Erfolgt diese Axialverlagerung des Kolbens beispielsweise in Ausrückrichtung, muss zum Einrücken nicht nur der eigentliche Schließdruck des Kolbens über die Druckmittelleitungen eingestellt werden, sondern darüber hinaus auch eine Kraft, die betragsmäßig dem Druckgefälle entspricht, das sich aufgrund des Drehzahlgefälles beim Druckmittel eingestellt hat. Da dieses Druckgefälle in Abhängigkeit von der jeweiligen Drehzahl variiert, gestaltet sich ein sauberes Einrücken des Kolbens problematisch.

Der Erfindung liegt die Aufgabe zugrunde, eine hydrodynamische Kopplungsanordnung derart auszubilden, dass bei kompaktem Aufbau ein problemloses Ein- oder Ausrücken des Kolbens einer Kupplungseinrichtung gewährleistet ist.

Zur Lösung dieser Aufgabe ist vorgesehen, eine hydrodynamische Kopplungsanordnung mit einem Gehäuse zu versehen, welches an Druckmittelleitungen zur Ein- oder Ableitung von Druckmittel wenigstens in einen Druckraum angeschlossen ist, der mittels eines Kolbens einer Kupplungseinrichtung gegenüber einem in dem Gehäuse ebenfalls vorgesehenen Torusraum eines hydrodynamischen Kreises zumindest weitgehend abgedichtet ist, wobei zur axial verlagerbaren Aufnahme einer radial inneren Kolbennabe des Kolbens der Kupplungseinrichtung ein relativ zum Gehäuse drehbarer Aufnahmebereich und zur Herstellung zumindest einer Strömungsverbindung zwischen wenigstens einer Druckmittelleitung und dem Druckraum ein relativ zum Gehäuse drehbarer Durchlass in einem Durchlassbereich vorgesehen ist.

Von besonderer Bedeutung ist, dass der Aufnahmebereich ebenso wie der Durchlassbereich in Drehverbindung zu einer eine Strömung von Druckmittel im Druckraum beeinflussenden Verzögerungseinrichtung steht, wobei die Strömung des Druckmittels nach Durchgang durch den Durchlassbereich in den Druckraum gelangt, und die Verzögerungseinrichtung (17) über eine Verwirbelungsbeschaufelung (16) verfügt, die mit wenigstens einer Verwirbelungsschaufel (15) versehen ist, die zumindest im Wesentlichen über eine Erstreckung nach radial außen in den Druckraum (40) verfügt.

Da der Kolben der Kupplungseinrichtung mit einer radial inneren Kolbennabe auf einem Aufnahmebereich angeordnet ist, und dieser Aufnahmebereich relativ zum Gehäuse drehbar ist, wird der Aufnahmebereich mit einer anderen, bei Zugbetrieb geringeren Drehzahl bewegt als das mit Antriebsdrehzahl rotierende Gehäuse. Ist der Aufnahmebereich an einem Bauteil vorgesehen, das mit einem abtriebsseitigen Bauteil, wie einem Turbinenrad oder dem Ausgang eines Torsionsschwingungsdämpfers drehfest ist, dann rotiert der Aufnahmebereich mit Abtriebsdrehzahl. Wegen der Drehverbindung des Aufnahmebereichs ebenso wie des Durchlassbereiches mit der Verzögerungseinrichtung wird durch die Verzögerungseinrichtung Einfluss auf die nach Durchgang durch den Durchlassbereich in den Druckraum gelangende Druckmittelströmung genommen, indem die Druckmittelströmung auf eine Rotationsgeschwindigkeit verzögert wird, die einer ansonsten bei Abtriebsdrehzahl anliegenden Rotationsgeschwindigkeit zumindest weitgehend angenähert ist. Dies gilt auch dann, wenn der Druckraum axial zwischen dem Wandlergehäuse und dem Kolben vorgesehen sein sollte, und damit zwischen zwei im Wesentlichen mit Antriebsdrehzahl bewegten Bauteilen. Auf der Gegenseite des Kolbens der Kupplungseinrichtung befindet sich der Torusraum, in welchem insbesondere abtriebsseitige Bauteile, wie das Turbinenrad oder der Ausgang des Torsionsschwingungsdämpfers, wesentlichen Einfluss auf die Rotationsgeschwindigkeit des Druckmittels nehmen. Dadurch nähert sich auch im Torusraum die Rotationsgeschwindigkeit des Druckmittels im Wesentlichen der Abtriebsdrehzahl an.

Durch Verzögerung der Rotationsgeschwindigkeit des Druckmittels antriebsseitig des Kolbens mittels der Verzögerungseinrichtung an die Rotationsgeschwindigkeit des Druckmittels abtriebsseitig des Kolbens wird also erreicht, dass beidseits des Kolbens vergleichbare Rotationsgeschwindigkeiten des Druckmittels anliegen, wodurch ein betriebsbedingtes, ungewolltes Druckgefälle in den Räumen beidseits des Kolbens vermieden wird. Dies macht sich bei einem Ein- oder Ausrückvorgang der Kupplungseinrichtung vorteilhaft bemerkbar, da bereits ein vergleichbar geringer Druck, aufgebracht über eine der Druckleitungen, genügt, um eine Axialverlagerung des Kolbens gegenüber dem Aufnahmebereich zu erzeugen.

Wie bereits angedeutet, ist die Verzögerungseinrichtung dazu vorgesehen, eine Strömung von Druckmittel im Druckraum zu beeinflussen. Hierzu stellt die Verzögerungseinrichtung mittels der wenigstens einen Verwirbelungsschaufel Verdrängungs- und/oder Scherflächen für das im Druckraum enthaltene Druckmittel bereit. Auf diese Weise vermag die Verzögerungseinrichtung das im Druckraum enthaltene Druckmittel mit einer Drehzahl zu beaufschlagen, welche bei Zugbetrieb unterhalb der von Gehäuse und Kolben bereitgestellten Antriebsdrehzahl liegt. Da dieses Druckmittel über den mit der Verzögerungseinrichtung drehfesten Durchlassbereich in den Druckraum geleitet wird, muss über die Verzögerungseinrichtung lediglich versucht werden, bei dem Druckmittel eine durch die Wirkung von Gehäuse und Kolben bedingte Anhebung der Rotationsgeschwindigkeit zu vermeiden. Zwar könnte diese Funktion bereits mit nur einer Verwirbelungsschaufel erbracht werden, jedoch ist es zur Vermeidung von Unwuchten besser, wenn die Verzögerungseinrichtung über eine Verwirbelungsbeschaufelung verfügt, die vorzugsweise jeweils Paare von Verwirbelungsschaufeln aufweist, die jeweils diametral zu einer Zentralachse des Gehäuses der Kopplungsanordnung vorgesehen sind.

Die wenigstens eine Verwirbelungsschaufel ist vorzugsweise entweder an einer Schaufelnabe der Verwirbelungsbeschaufelung oder an einer diese Schaufelnabe drehfest aufnehmenden Versorgungsnabe drehfest aufgenommen, wobei auch der Aufnahmebereich oder der Durchlassbereich entweder an der Schaufelnabe oder an der Versorgungsnabe vorgesehen sein können.

Die wenigstens eine Verwirbelungsschaufel der Verwirbelungsbeschaufelung und die Schaufelnabe können in einstückiger Ausbildung vorgesehen sein. Alternativ kann die wenigstens eine Verwirbelungsschaufel an der Schaufelnabe oder an der Versorgungsnabe befestigt sein. Dies kann beispielsweise dadurch erfolgen, dass die wenigstens eine Verwirbelungsschaufel in eine in Erstreckungsrichtung der Zentralachse verlaufende Aufnahme der Schaufelnabe oder der Versorgungsnabe eingelegt wird. Zwar besteht dann eine Drehsicherung für die wenigstens eine Verwirbelungsschaufel, jedoch sind zusätzliche Axialsicherungen notwendig. Alternativ hierzu kann die wenigstens eine Verwirbelungsschaufel aber auch an der Schaufelnabe befestigt sein, und zwar durch kraftschlüssige Verbindung, wie durch Verstemmen oder Aufschrumpfen, oder aber durch stoffschlüssige Verbindung, wie durch Schweißen oder Löten.

Unabhängig von ihrer Anbindung an die Verwirbelungsbeschaufelung kann die wenigstens eine Verwirbelungsschaufel entsprechend der jeweiligen Anforderung ausgebildet sein. Wesentliches Merkmal der Ausgestaltung ist hierbei, dass die wenigstens eine Verwirbelungsschaufel sich zumindest mit einer Komponente in Radialrichtung, also mit zumindest einer Komponente radial zur Zentralachse und/oder mit zumindest einer Komponente in Achsrichtung, also in Verlaufsrichtung der Zentralachse, erstreckt. Fertigungstechnisch am einfachsten wird die Herstellung der wenigstens einen Verwirbelungsschaufel sein, wenn diese in Radialrichtung und/oder in Achsrichtung zumindest im Wesentlichen mit krümmungsfreiem Verlauf ausgebildet ist. Strömungstechnisch günstiger kann die wenigstens eine Verwirbelungsschaufel allerdings sein, wenn diese in Radialrichtung und/oder in Achsrichtung zumindest im Wesentlichen mit krümmungsbehaftetem Verlauf ausgebildet ist. Die wenigstens eine Verwirbelungsschaufel kann hierbei mit Neigung in Radialrichtung und/oder mit Neigung gegenüber der Achsrichtung angeordnet sein. Liegt eine Neigung in Radialrichtung vor, dann wird diese bei Ausrichtung entgegen der Drehrichtung der Verwirbelungsbeschaufelung die Wirkung der wenigstens einen Verwirbelungsschaufel verstärken, bei Ausrichtung in Drehrichtung der Verwirbelungsbeschaufelung die Wirkung der wenigstens einen Verwirbelungsschaufel abschwächen.

Eine vorteilhafte Ausgestaltung der Verwirbelungsbeschaufelung besteht darin, diese mit einem zu einer Schaufelnabe drehfesten Schaufelträger auszubilden, und zur Bildung der zumindest einen Verwirbelungsschaufel wenigstens ein vom Schaufelträger durch Freistellung gelöstes Schaufelträgersegment mit zumindest einer Komponente in Achsrichtung gegenüber einer der Stirnseiten des Schaufelträgers herauszustellen. Hierdurch kann ein Fertigungsvorgang zur Verbindung von Schaufelträger und Verwirbelungsschaufel eingespart werden, da beide Bauteile einem gemeinsamen Ausgangsbauteil entstammen. Die Wirkung der Verwirbelungsschaufeln auf das dieselben umgebende Druckmittel wird nochmals verstärkt, wenn der Schaufelträger in Umfangsrichtung jeweils angrenzend an ein Schaufelträgersegment mit einer vom Umfangsbereich nach radial innen greifenden Radialaussparung versehen ist, da die umfangsseitigen Kanten der Radialaussparung ebenfalls auf das Druckmittel einwirken.

In alternativer Ausgestaltung kann die Verwirbelungsbeschaufelung, die weiterhin über einen mit der Schaufelnabe drehfesten Schaufelträger verfügt, zur Bildung der zumindest einen Verwirbelungsschaufel wenigstens ein Schaufelträgersegment mittels plastischer Ausformung des Schaufelträgers gegenüber einer von dessen Stirnseiten herausstellen. Die Rückseite der Verwirbelungsschaufel an der anderen Stirnseite des Schaufelträgers zeigt sich dann gegenüber dieser Stirnseite zurückversetzt.

Auch bei Ausbildung der Verwirbelungsbeschaufelung mit einem Schaufelträger, der über wenigstens ein als Verwirbelungsschaufel dienendes Schaufelträgersegment verfügt, kann die wenigstens eine Verwirbelungsschaufel mit einer ihrer Drehrichtung entgegengesetzten Neigung oder mit einer ihrer Drehrichtung entsprechenden Neigung von der Radialrichtung abweichen.

Eine sehr vorteilhafte Ergänzung der Verwirbelungsbeschaufelung liegt darin, den Durchlassbereich in Bezug zur Zentralachse des Gehäuses der Kopplungsanordnung radial weiter nach außen ragen zu lassen als die den Aufnahmebereich für die radial innere Kolbennabe umschließende radial innere Kolbennabe des Kolbens. Da der Aufnahmebereich ebenso wie der Durchlassbereich jeweils mit Relativdrehzahl zum Gehäuse der Kopplungsanordnung und damit bei Zugbetrieb mit gegenüber der Gehäusedrehzahl reduzierter Drehzahl betrieben wird, wird aufgrund dieser Maßnahme das den Durchlassbereich durchströmende Druckmittel nicht nur mit gegenüber der Gehäusedrehzahl reduzierter Drehzahl in den Druckraum gelangen, sondern wird darüber hinaus radial relativ weit außen in den Druckraum eingebracht, bremst also auch dort im Druckraum enthaltenes Druckmittel ab.

Die Erfindung ist nachfolgend anhand eines Ausführungsbeispiels näher erläutert. Es zeigt:
Fig. 1 eine Schnittdarstellung einer hydrodynamischen Kopplungsanordnung in Form eines hydrodynamischen Drehmomentwandlers, mit einem Gehäuse, das axial zwischen einem Gehäusedeckel und einem Torsionsschwingungsdämpfer eine zum Druckmitteldurchgang bestimmte Versorgungsnabe mit einer eine Verwirbelungsbeschaufelung aufweisenden Verzögerungseinrichtung aufnimmt, wobei die Verzögerungseinrichtung einstückig mit der Versorgungsnabe ausgebildet ist;
Fig. 2 eine Herauszeichnung der Versorgungsnabe mit der eine Verwirbelungsbeschaufelung aufweisenden Verzögerungseinrichtung in vergrößerter Darstellung;
Fig. 3 wie Fig. 1, aber mit Ausbildung der Verwirbelungsbeschaufelung der Verzögerungseinrichtung mit einer Schaufelnabe und mit einstückig daran vorgesehenen Verwirbelungsschaufeln, wobei die Schaufelnabe drehfest an der Versorgungsnabe aufgenommen ist;
Fig. 4 eine Herauszeichnung der Verwirbelungsbeschaufelung der Verzögerungseinrichtung gemäß Fig. 3 in vergrößerter Darstellung, mit krümmungsfreier Ausbildung der Verwirbelungsschaufeln mit radialer Erstreckung;
Fig. 5 eine Draufsicht auf die in Fig. 4 gezeigte Verwirbelungsbeschaufelung;
Fig. 6 wie Fig. 4, aber mit Verwirbelungsschaufeln, die mit Neigung gegenüber der radialen Erstreckung entgegen der Drehrichtung versehen sind;
Fig. 7 eine Draufsicht auf die in Fig. 6 gezeigte Verwirbelungsbeschaufelung;
Fig. 8 wie Fig. 4, aber mit krümmungsbehafteter Ausbildung der Verwirbelungsschaufeln, die von der radialen Erstreckung abweichen und entgegen der Drehrichtung gekrümmt sind;
Fig. 9 eine Draufsicht auf die in Fig. 8 gezeigte Verwirbelungsbeschaufelung;
Fig. 10 wie Fig. 4, aber mit Verwirbelungsschaufeln, die mit krümmungsfreier Neigung gegenüber der axialen Erstreckung entgegen der Drehrichtung versehen sind;
Fig. 11 eine Draufsicht auf die in Fig. 10 gezeigte Verwirbelungsbeschaufelung;
Fig. 12 wie Fig. 10, aber mit Verwirbelungsschaufeln, die mit krümmungsbehafteter Neigung gegenüber der axialen Erstreckung entgegen der Drehrichtung versehen sind;
Fig. 13 eine Draufsicht auf die in Fig. 12 gezeigte Verwirbelungsbeschaufelung;
Fig. 14 wie Fig. 10, aber mit Verwirbelungsschaufeln, die mit krümmungsbehafteter Neigung gegenüber der axialen Erstreckung und gegenüber der radialen Erstreckung entgegen der Drehrichtung versehen sind;
Fig. 15 eine Draufsicht auf die in Fig. 14 gezeigte Verwirbelungsbeschaufelung;
Fig. 16 wie Fig. 3, aber mit Aufnahme der Verwirbelungsschaufeln unmittelbar an der Versorgungsnabe;
Fig. 17 wie Fig. 16, aber mit Aufnahme der Verwirbelungsschaufeln an einer von der Versorgungsnabe getragenen Schaufelnabe;
Fig. 18 eine Herauszeichnung der in Fig. 17 gezeigten Schaufelnabe und der Verwirbelungsschaufeln in vergrößerter Darstellung;
Fig. 19 eine Draufsicht auf die in Fig. 18 gezeigte Verwirbelungsbeschaufelung;
Fig. 20 einen auf der Versorgungsnabe mittels eines Sicherungsringes axial befestigten Schaufelträger einer Verwirbelungsbeschaufelung mit einer Mehrzahl von als Verwirbelungsschaufeln wirksamen Schaufelträgersegmenten, die sich axial erstrecken;
Fig. 21 eine Draufsicht auf die in Fig. 20 gezeigte Verwirbelungsbeschaufelung;
Fig. 22 wie Fig. 20, aber mit einem mittels Verstemmung auf der Versorgungsnabe befestigten Schaufelträger;
Fig. 23 wie Fig. 22, aber mit vergrößerter Herauszeichnung des Bereiches der Verstemmung;
Fig. 24 eine Draufsicht auf die in Fig. 22 gezeigte Verwirbelungsbeschaufelung;
Fig. 25 wie Fig. 20, aber mit Radialaussparungen in Umfangsrichtung zwischen je zwei Verwirbelungsschaufeln;
Fig. 26 eine Draufsicht auf die in Fig. 25 gezeigte Verwirbelungsbeschaufelung;
Fig. 27 wie Fig. 20, aber mit einer Mehrzahl von als Verwirbelungsschaufeln wirksamen Schaufelträgersegmenten, die sich geneigt zur axialen Erstreckungsrichtung ausdehnen;
Fig. 28 eine Draufsicht auf die in Fig. 27 gezeigte Verwirbelungsbeschaufelung;
Fig. 29 einen auf der Versorgungsnabe befestigten Schaufelträger einer Verwirbelungsbeschaufelung mit einer Mehrzahl von als Verwirbelungsschaufeln dienenden Schaufelträgersegmenten, die jeweils mittels plastischer Ausformung des Schaufelträgers gegenüber einer von dessen Stirnseiten herausgestellt sind;
Fig. 30 eine Draufsicht auf die in Fig. 29 gezeigte Verwirbelungsbeschaufelung;
Fig. 31 wie Fig. 30, aber mit einer zusätzlichen Ausgleichsöffnung;
Fig. 32 wie Fig. 2, aber mit einem radial weiter nach außen geführten Durchlassbereich der Versorgungsnabe für Druckmittel;
Fig. 33 wie Fig. 1, aber mit einem radial weniger weit nach innen reichenden Kolben einer Kupplungsvorrichtung und mit einer radial weiter nach außen ragenden Versorgungsnabe mit einer Verzögerungseinrichtung.

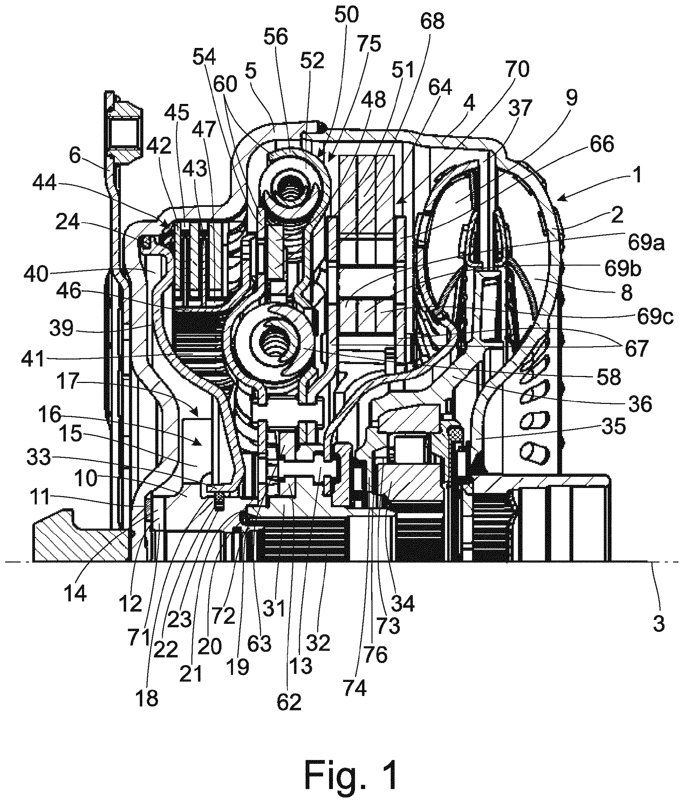

In Fig 1 ist eine Kopplungsanordnung 1 in Form eines hydrodynamischen Drehmomentwandlers 2 in Schnittdarstellung abgebildet. Ein um eine Zentralachse 3 drehbares Gehäuse 4 ist an seiner einem Antrieb, wie einer Brennkraftmaschine zugewandten Seite mit einem Gehäusedeckel 5 versehen, an welchem eine Antriebsplatte 6 befestigt ist. Die Antriebsplatte 6 kann über eine nicht gezeigte Flexplatte mit einer Kurbelwelle des Antriebs drehfest verbunden werden. Eine derartige Flexplatte sowie die damit verbundene Kurbelwelle des Antriebs ist in der DE 32 22 119 C1 in Fig. 1 dargestellt.

Das Gehäuse 4 bildet an seiner vom Gehäusedeckel 5 abgewandten Seite ein Pumpenrad 8, dem ein Turbinenrad 9 axial gegenüberliegend zugeordnet ist. Das Turbinenrad 9 ist über eine Mehrzahl von entlang seines Umfangs vorgesehenen Befestigungselementen 13 drehfest mit einer Abtriebsnabe 31 verbunden, die mittels einer Innenverzahnung 32 mit einem nicht gezeigten Abtrieb, wie einer Getriebeeingangswelle eines Getriebes, drehfest verbunden ist. Die Abtriebsnabe 31 stützt sich in Achsrichtung einerends über eine Versorgungsnabe 10 und einen Abstandsring 11 an dem Gehäusedeckel 5 des Gehäuses 4 und anderenends an einem Freilauf 34 ab, der sich seinerseits an einer abtriebsseitigen Gehäusenabe 35 des Gehäuses 4 axial abstützt. Der Freilauf 34 zentriert ein Leitrad 36, das axial zwischen dem Pumpenrad 8 und dem Turbinenrad 9 angeordnet ist, und zusammen mit dem Pumpenrad 8 und dem Turbinenrad 9 einen hydrodynamischen Kreis 37 bildet.

Die Versorgungsnabe 10 weist an ihrer dem Abstandsring 11 und damit dem Gehäusedeckel 5 zugewandten Seite einen Durchlassbereich 12 mit zumindest einem Durchlass 14, vorzugsweise aber mit einer Mehrzahl von über den Umfang gleichmäßig verteilten Durchlässen 14 auf. Axial benachbart zum Durchlassbereich 12 geht die Versorgungsnabe 10 über in zumindest eine Verwirbelungsschaufel 15, vorzugsweise aber in eine Mehrzahl von über den Umfang gleichmäßig verteilten Verwirbelungsschaufeln 15. Die zumindest eine Verwirbelungsschaufel 15 ist Teil einer Verwirbelungsbeschaufelung 16, die wiederum Teil einer nachfolgend ausführlich erläuterten Verzögerungseinrichtung 17 für Druckmittel ist, das den zumindest einen Durchlass 14 durchströmt. Axial an die Verwirbelungsbeschaufelung 16 schließt sich ein Aufnahmebereich 18 für einen Kolben 39 einer Kupplungsvorrichtung 44 an. In dem Aufnahmebereich 18 ist eine Vertiefung 23 zur Aufnahme einer Abdichtung 22 vorgesehen, die mit einer das radial innere Ende des Kolbens 39 bildenden Kolbennabe 33 in Wirkverbindung steht. Das von den Durchlässen 14 abgewandte axiale Ende der Versorgungsnabe 10 verfügt über einen eine Außenverzahnung aufweisenden Axialvorsprung 19, der über seine Außenverzahnung drehfest in die Innenverzahnung 32 der Abtriebsnabe 31 eingreift. Schließlich ist die Versorgungsnabe 10 axial benachbart zum Axialvorsprung 19 mit einem Verbindungsbereich 21 versehen, der zum Durchgang von Druckmittel zumindest einen Durchgang 20 aufweist.

Der Kolben 39 nimmt an seinem radial äußeren Ende eine Abdichtung 24 auf, über welche er zumindest im Wesentlichen in radialer Richtung mit dem Gehäusedeckel 5 und daher mit dem Gehäuse 4 in Wirkverbindung steht. Da die Abdichtung 24 auf einem erheblich größeren Durchmesser wirksam ist als die der Kolbennabe 33 zugeordnete Abdichtung 22, und zudem zwischen dem Gehäusedeckel 5 und der äußeren Abdichtung 24 eine deutlich höhere Reibkraft wirkt als zwischen der Kolbennabe 33 und der Abdichtung 22, wird der Kolben 39 im Wesentlichen mit der Drehzahl des Gehäuses 4 und daher mit Antriebsdrehzahl um die Zentralachse 3 rotieren. Die Versorgungsnabe 10 und damit die Verzögerungseinrichtung 17 rotiert dagegen mit der Drehzahl der Abtriebsnabe 31, und daher mit Abtriebsdrehzahl.

Durch den Kolben 39 wird ein axial zwischen ihm und dem Gehäusedeckel 5 liegender Druckraum 40 begrenzt, während die axiale Gegenseite des Kolbens 39 einen Torusraum 41 begrenzt, welcher eine Mehrzahl von Kupplungselementen 42, 43 umgibt, die zusammen mit dem Kolben 39 eine Kupplungsvorrichtung 44 bilden. Radial äußere erste Kupplungselemente 42 sind mittels einer Verzahnung 45 drehfest am Gehäuse 4 aufgenommen, während radial innere zweite Kupplungselemente 43 ebenfalls mittels einer Verzahnung 47 mit einem Innenkupplungselemententräger 46 drehverbunden sind, der mit einer als Eingang 48 eines Torsionsschwingungsdämpfers 50 wirksamen radial äußeren Nabenscheibe 51 drehverbunden ist. Die radial äußere Nabenscheibe 51 wirkt in Umfangsrichtung auf eine radial äußere erste Dämpfereinheit 52 des Torsionsschwingungsdämpfers 50, die sich an ihrer von der radial äußeren Nabenscheibe 51 abgewandten Umfangsseite an Deckblechen 54, 56 abstützt, welche einerseits den Ausgang der radial äußeren ersten Dämpfereinheit 52 und andererseits den Eingang einer radial inneren zweiten Dämpfereinheit 58 des Torsionsschwingungsdämpfers 50 bilden, und daher nachfolgend kurz als Zwischenübertragungselemente 60 bezeichnet sind. Die radial innere zweite Dämpfereinheit 58 stützt sich mit ihrer von den Zwischenübertragungselementen 60 abgewandten Umfangsseite an einer radial inneren Nabenscheibe 62 ab, die mit der Abtriebsnabe 31 drehfest verbunden ist, und die einen Ausgang 63 des Torsionsschwingungsdämpfers 50 bildet.

An den Zwischenübertragungselementen 60 des Torsionsschwingungsdämpfers 50 ist ein Tilgermassen-Trägerelement 64 eines Tilgersystems 70 befestigt, wobei das antriebsseitiges Tilgermassen-Trägerelement 64 gemeinsam mit einem axial beabstandeten abtriebsseitigen Tilgermassen-Trägerelement 66 einen Tilgermassenträger 67 bildet. Dieser Tilgermassenträger 67 dient zur Aufnahme einer Mehrzahl von entlang des Umfangs verteilten Tilgermassen 68, wobei jede dieser Tilgermassen 68 in Achsrichtung aus jeweils einer Mehrzahl an Tilgermassenelementen 69a, 69b und 69c zusammengesetzt sein kann. Zur axialen Verbindung der beiden Tilgermassen-Trägerelemente 64 und 66 sind eine Mehrzahl von nicht dargestellten Abstandsstücken vorgesehen. Derart relativ zueinander festgelegt, sichern die beiden Tilgermassen-Trägerelemente 64 und 66 die Tilgermassenelemente 69a bis 69c der jeweiligen Tilgermasse 68 axial zwischen sich. Die Tilgermassenelemente 69a bis 69c weisen, ebenso wie die Tilgermassen-Trägerelemente 64, 66, an sich bekannte und daher nicht dargestellte Führungsbahnen auf, die jeweils durch walzenförmige Koppelelemente miteinander in Wirkverbindung stehen, und dafür sorgen, dass die Tilgermassen 68 Relativauslenkungen gegenüber dem Tilgermassenträger 67 sowohl in Radialrichtung als auch in Umfangsrichtung ausführen können. Einzige variable Größe bei dem Tilgersystem 70 ist die Drehzahl, so dass dieses Tilgersystem 70 drehzahladaptiv wirksam ist. Der Torsionsschwingungsdämpfer 50 bildet zusammen mit dem Tilgersystem 70 eine Schwingungsdämpfungseinrichtung 75.

Der Durchlass 14 ist Teil einer ersten Druckmittelleitung 71, der Durchgang 20 Teil einer zweiten Druckmittelleitung 72 und eine Passage 76 in einem axial zwischen Abtriebsnabe 31 und Freilauf 34 vorgesehenen Drucklager 74 ist Teil einer dritten Druckmittelleitung 73. Die Druckmittelleitungen 71 bis 73 sind jeweils nicht komplett dargestellt, da die Gestaltung derartiger Druckmittelleitungen im Einzelnen der eingangs zitierten DE 10 2007 014 311 A1 entnommen werden können. Wie die DE 10 2007 014 311 A1 in Fig. 1 zeigt, kann die erste Druckmittelleitung beispielsweise im Inneren einer im Zentrum einer Getriebeeingangswelle vorgesehenen Hülse verlaufen, während die zweite Druckmittelleitung zwar radial außerhalb dieser Hülse, aber noch innerhalb der Getriebeeingangswelle verläuft. Die dritte Druckmittelleitung schließlich verläuft radial zwischen der Außenseite der Getriebeeingangswelle und einer Stützhülse für den das Leitrad aufnehmenden Freilauf.

Wie zuvor bereits erläutert, rotiert der Kolben 39 der Kupplungsvorrichtung 44 im Wesentlichen mit der Drehzahl des Gehäuses 4 und damit - einen Zugbetrieb vorausgesetzt - mit Antriebsdrehzahl um die Zentralachse 3. Im Gegensatz dazu rotiert die Versorgungsnabe 10 und damit die Verwirbelungsbeschaufelung 16 der Verzögerungseinrichtung 17 mit der Drehzahl der Abtriebsnabe 31, und damit aufgrund der Drehverbindung der Abtriebsnabe 31 mit der Getriebeeingangswelle mit Abtriebsdrehzahl um die Zentralachse 3, und zwar ebenfalls bei Zugbetrieb. Druckmittel, welches über die erste Druckmittelleitung 71 und den zumindest einen Durchlass 14 in den Druckraum 40 gelangt, würde zwar am zumindest einen Durchlass 14 mit Abtriebsdrehzahl austreten, jedoch würden radial weiter außen Gehäusedeckel 5 und Kolben 39 das Druckmittel mit Antriebsdrehzahl beaufschlagen, und dadurch in dem Druckmittel eine Rotation im Druckraum 40 um die Zentralachse mit einer der Antriebsdrehzahl zumindest im Wesentlichen angenäherten Drehzahl zu erzeugen. Diesem Effekt wirkt die Verwirbelungsbeschaufelung 16 entgegen, indem diese nach radial außen weit in den Druckraum 40 greift, und aufgrund ihrer Rotation mit Abtriebsdrehzahl einer Beschleunigung des Druckmittels durch Gehäusedeckel 5 und Kolben 39 entgegen wirkt. Die Verwirbelungsbeschaufelung 16 erbringt demnach die Funktion einer Verzögerungseinrichtung 17 für das Druckmittel.

Zwar rotiert der Kolben 39 der Kupplungsvorrichtung 44 zumindest im Wesentlichen mit Antriebsdrehzahl, jedoch werden wesentliche Bauteile im Torusraum 41 mit geringerer Rotationsgeschwindigkeit bewegt. Während nämlich der Ausgang 63 des Torsionsschwingungsdämpfers 50 ebenso wie das Turbinenrad 9 jeweils mit Abtriebsdrehzahl rotieren, nehmen die Zwischenübertragungselemente 60 ebenso wie das Tilgersystem 70 eine Rotationsgeschwindigkeit an, welche geringer als die Antriebsdrehzahl, aber höher als die Abtriebsdrehzahl ist. Im Torusraum 41 wird Druckmittel, das über die zweite Druckmittelleitung 72 und damit den Durchgang 20 des Verbindungsbereichs 21 in den Torusraum eingeleitet wird, also mit einer vergleichbaren Rotationsgeschwindigkeit um die Zentralachse 3 bewegt, als das in den Druckraum 41 eingeführte Druckmittel. In beiden Räumen 40 und 41 wird das Druckmittel also mit einer Rotationsgeschwindigkeit um die Zentralachse 3 rotieren, die betragsmäßig zwischen der Antriebs- und der Abtriebsdrehzahl liegt. Diese vergleichbaren Rotationsgeschwindigkeiten in den beiden Räumen 40 und 41 führen dazu, dass der Kolben 39 der Kupplungsvorrichtung 44 beidseits mit vergleichbaren Drücken beaufschlagt ist, so dass erst dass willkürliche Erhöhen des Drucks in einem der beiden Räume 40 und 41 zu einer Axialverlagerung des Kolbens 39 und damit zu einem Ein- oder Ausrücken des Kolbens 39 führt. Betriebsbedingte ungewollte Axialverlagerungen des Kolbens 39 sind dagegen aufgrund der Verzögerungseinrichtung 17 wirksam vermeidbar.

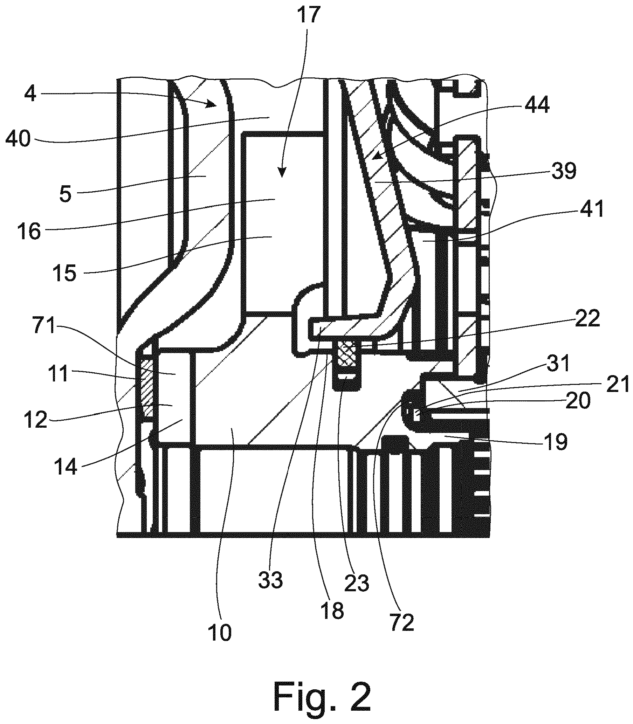

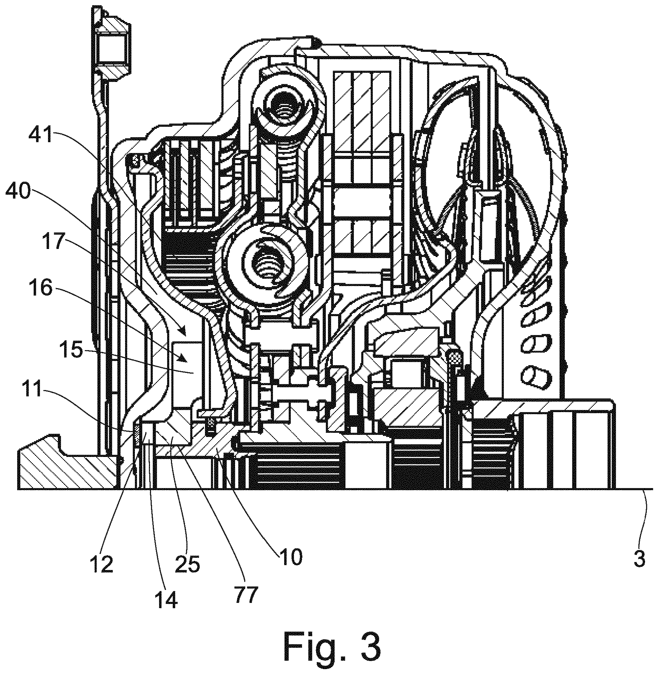

Wie die Fig. 1 und 2 zeigen, ist die zumindest eine Verwirbelungsschaufel 15 der Verwirbelungsbeschaufelung 16 einstückig mit der Versorgungsnabe 10 ausgebildet. Im Gegensatz dazu zeigt Fig. 3 eine Ausführung, bei welcher die Verwirbelungsbeschaufelung 16 über eine Schaufelnabe 25 verfügt, welche einerseits einstückig mit der zumindest einen Verwirbelungsschaufel 15 ausgebildet ist, und andererseits mit einem Zentriersitz 77 der Versorgungsnabe 10 drehfest verbunden ist. Weiterhin ist die Schaufelnabe 25 der Verwirbelungsbeschaufelung 16 mit dem zumindest einen Durchlass 14 des Durchlassbereiches 12 der Verzögerungseinrichtung 17 versehen. Trotz dieser geringen konstruktiven Unterschiede entspricht diese Verzögerungseinrichtung 17 der in den Fig. 1 oder 2 behandelten Verzögerungseinrichtung 17 funktional.

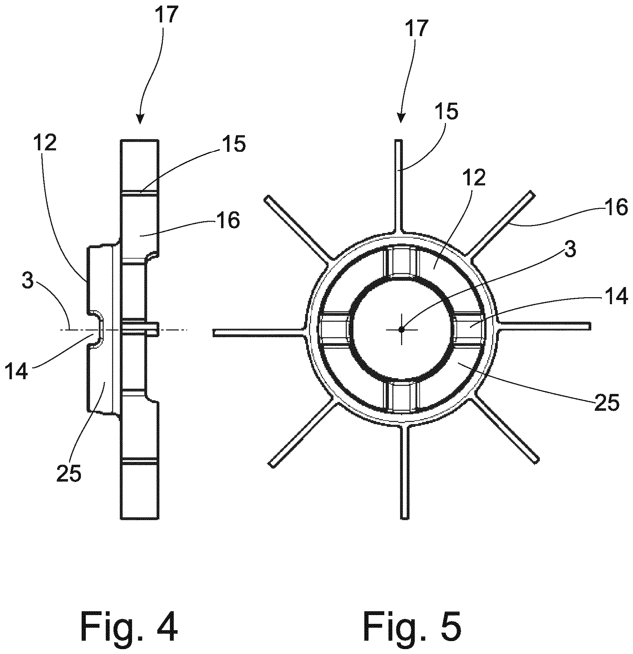

In Fig. 4 und 5 ist die als Verzögerungseinrichtung 17 wirksame Verwirbelungsbeschaufelung 16 gemäß Fig. 3 herausgezeichnet. Wie deutlich erkennbar, ist die Schaufelnabe 25 im Wesentlichen ringförmig ausgebildet, und ist einstückig mit einer Mehrzahl von Verwirbelungsschaufeln 15, die in im Wesentlichen gleichen Umfangsabständen voneinander vorgesehen sind. Die Verwirbelungsschaufeln 15 sind jeweils auf die Zentralachse 3 ausgerichtet, und verlaufen sowohl in Radialrichtung (Fig. 5) als auch in Achsrichtung (Fig. 4) jeweils im Wesentlichen krümmungsfrei.

Die Schaufelnabe 25 ist an ihrer dem Abstandsring 11 (Fig. 3) und damit dem Gehäusedeckel 5 zugewandten Seite mit Durchlässen 14 für Druckmittel versehen, so dass dieser axial neben den Verwirbelungsschaufeln 15 ausgebildete, im Wesentlichen ringförmige Bereich der Schaufelnabe 25 als Durchlassbereich 12 wirksam ist.

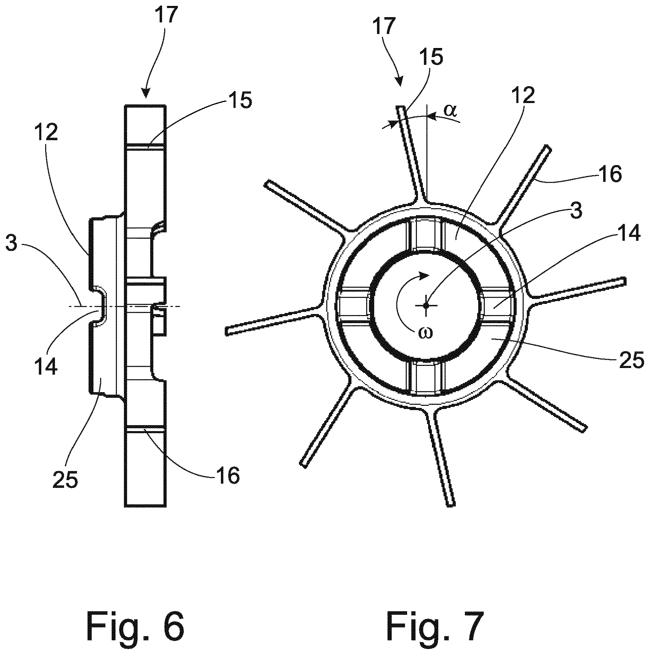

Die Verzögerungseinrichtung 17 der Fig. 6 und 7 weicht von der Verzögerungseinrichtung 17 der Fig. 4 und 5 dadurch ab, dass die Verwirbelungsschaufeln 15 der Verwirbelungsbeschaufelung 16 mit einer Neigung um einen Winkel α gegenüber einer im Wesentlichen radialen Ausrichtung verläuft, und zwar entgegengesetzt zu der durch einen Pfeil ω angedeuteten Drehrichtung.

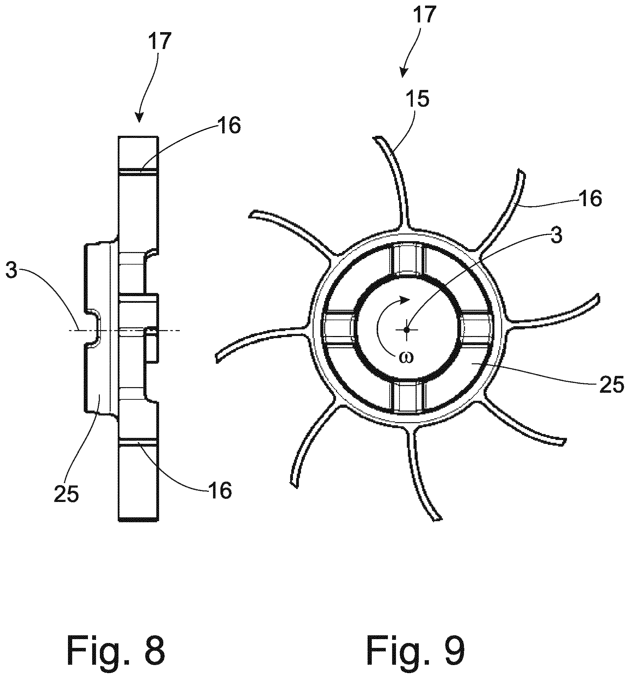

Auch bei der Verzögerungseinrichtung 17 der Fig. 8 und 9 sind die Verwirbelungsschaufeln 15 der Verwirbelungsbeschaufelung 16 gegenüber einer im Wesentlichen radialen Ausrichtung geneigt, und verlaufen zudem in Radialrichtung krümmungsbehaftet entgegengesetzt zu der durch einen Pfeil ω angedeuteten Drehrichtung.

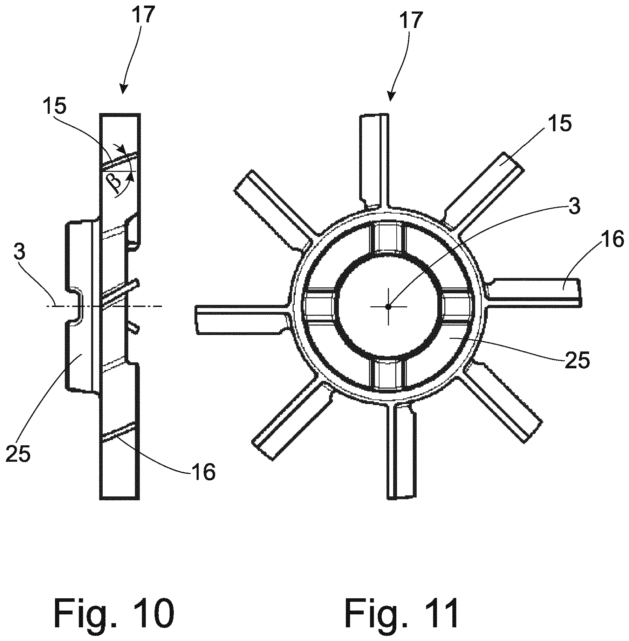

Die Verwirbelungsschaufeln 15 der Verwirbelungsbeschaufelung 16 der Fig. 10 und 11 sind im Wesentlichen auf die Zentralachse 3 ausgerichtet, und verlaufen demnach radial. In Achsrichtung weichen die Verwirbelungsschaufeln 15 allerdings um einen Winkel β gegenüber der Erstreckungsrichtung der Zentralachse 3 ab. Die Verwirbelungsschaufeln 15 sind allerdings sowohl in Radialrichtung als auch in Achsrichtung im Wesentlichen krümmungsfrei.

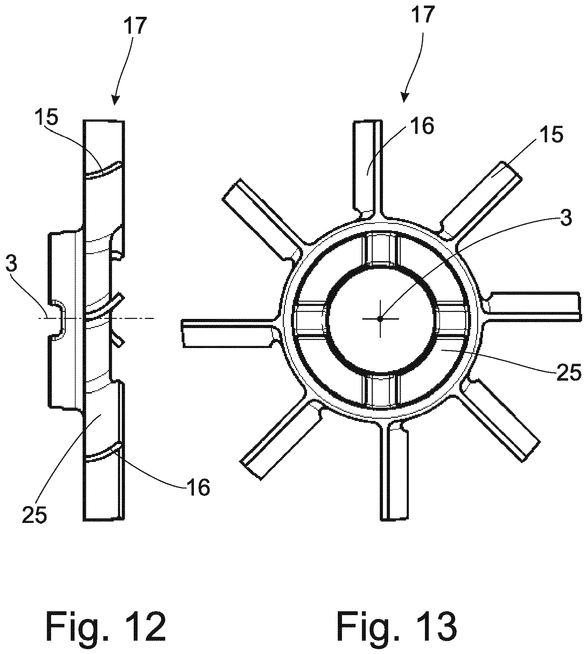

Im Gegensatz dazu sind die Verwirbelungsschaufeln 15 der Verwirbelungsbeschaufelung 16 der Fig. 12 und 13 in Radialrichtung im Wesentlichen auf die Zentralachse 3 ausgerichtet, weichen aber in Achsrichtung nicht nur gegenüber der Erstreckungsrichtung der Zentralachse 3 ab, sondern sind zudem in dieser Richtung krümmungsbehaftet.

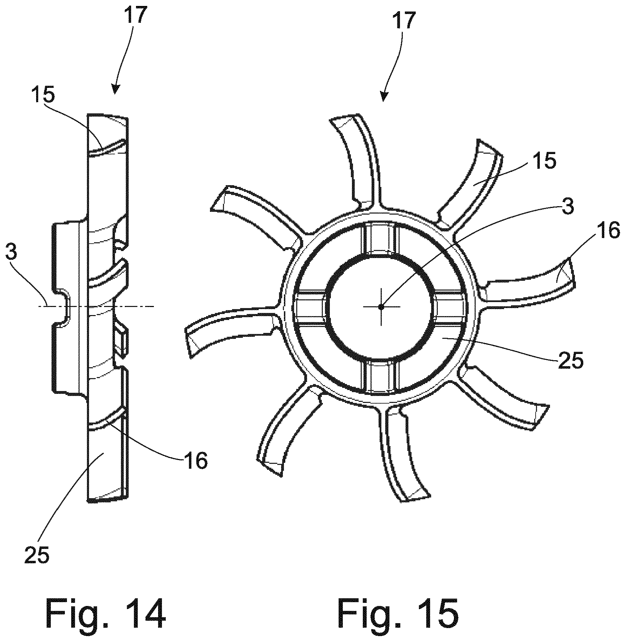

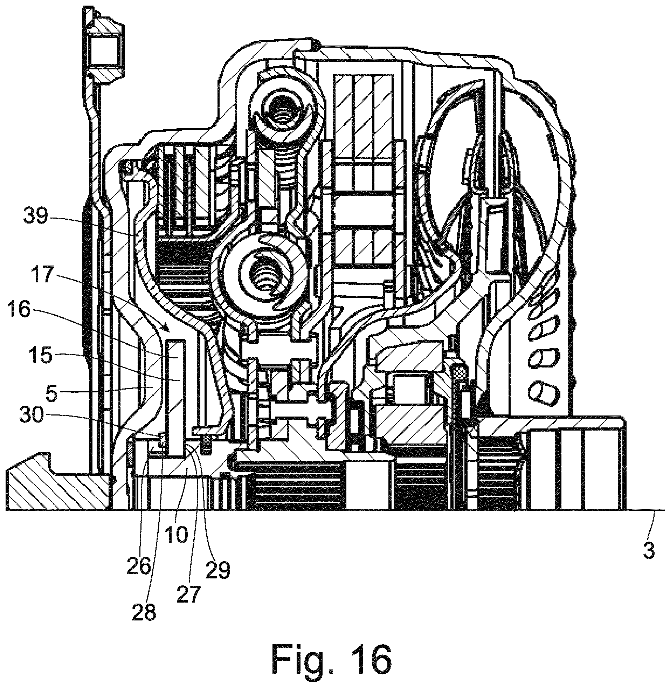

In Fig. 14 und 15 ist eine Verwirbelungsbeschaufelung 16 dargestellt, deren Verwirbelungsschaufeln 15 gegenüber einer im Wesentlichen radialen Ausrichtung geneigt sind, und zudem in Radialrichtung krümmungsbehaftet entgegengesetzt zu der durch einen Pfeil ω angedeuteten Drehrichtung verlaufen. In Achsrichtung weichen die Verwirbelungsschaufeln 15 ebenfalls gegenüber der Erstreckungsrichtung der Zentralachse 3 ab, und sind auch in dieser Richtung krümmungsbehaftet. In Fig. 16 ist eine Ausführung der Verzögerungseinrichtung 17 gezeigt, bei welcher die zumindest eine Verwirbelungsschaufel 15 der Verwirbelungsbeschaufelung 16 unmittelbar an der Versorgungsnabe 10 aufgenommen ist. Die Versorgungsnabe 10 weist hierzu eine sich im Wesentlichen in Erstreckungsrichtung der Zentralachse 3 erstreckende Aufnahme 26 auf, die in Umfangsrichtung an die entsprechende Verwirbelungsschaufel 15 angepasst ist, so dass dann, wenn die Verwirbelungsschaufel 15 in die Aufnahme 26 eingeschoben ist, eine Drehsicherung vorliegt. Axial legt sich die jeweilige Verwirbelungsschaufel 15 mit ihrer dem Kolben 39 zugewandten Stirnseite an einer Stufung 27 der Versorgungsnabe 10 an, während die dem Gehäusedeckel 5 zugewandte Stirnseite der Verwirbelungsschaufel 15 durch einen Sicherungsring 28 axial gehalten ist, der in den Umfang der Versorgungsnabe 10 eingelassen ist. Die Stufung 27 bildet eine erste Axialsicherung 29 für die Verwirbelungsschaufel 15, und der Sicherungsring 28 eine zweite Axialsicherung.

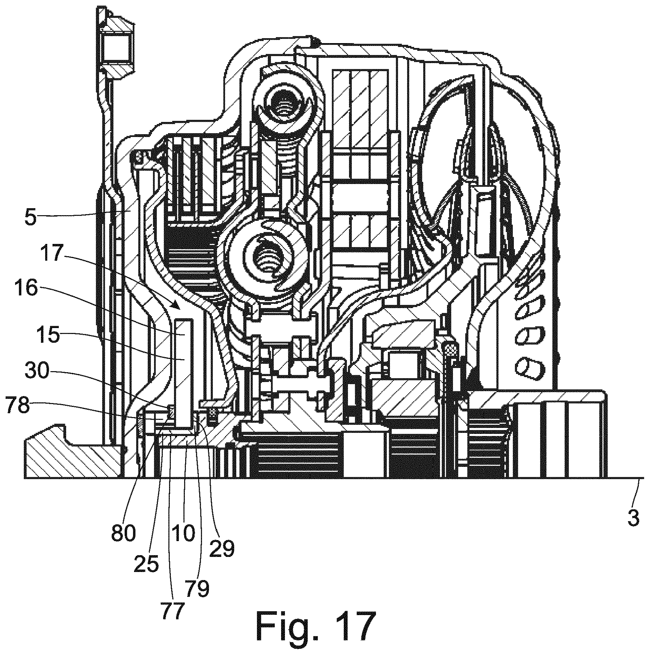

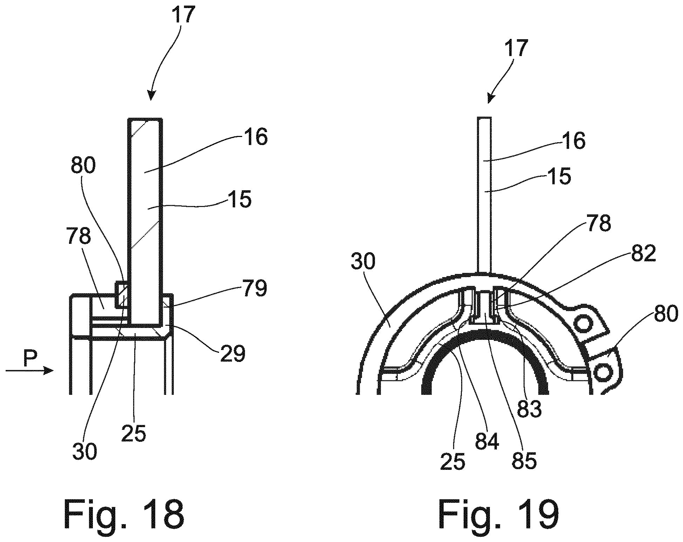

Die in Fig. 17 gezeigte Ausführung der Verzögerungseinrichtung 17 entspricht weitgehend der zu Fig. 16 beschriebenen Ausführung, unterscheidet sich aber dadurch, dass die zumindest eine Verwirbelungsschaufel 15 der Verwirbelungsbeschaufelung 16 über eine Schaufelnabe 25 verfügt. Diese Schaufelnabe 25 ist an einem Zentriersitz 77 der Versorgungsnabe 10 befestigt. Was die zumindest eine Verwirbelungsschaufel 15 der Verwirbelungsbeschaufelung 16 betrifft, so ist diese in eine sich im Wesentlichen in Erstreckungsrichtung der Zentralachse 3 erstreckenden Aufnahme 78 eingesetzt, die in Umfangsrichtung an die entsprechende Verwirbelungsschaufel 15 angepasst ist, so dass dann, wenn die Verwirbelungsschaufel 15 in die Aufnahme 78 eingesetzt ist, eine in Fig. 19 erkennbare Drehsicherung 82 vorliegt. Axial legt sich die jeweilige Verwirbelungsschaufel 15 mit ihrer dem Kolben 39 zugewandten Stirnseite an einem Radialvorsprung 79 der Schaufelnabe 25 an, während die dem Gehäusedeckel 5 zugewandte Stirnseite der Verwirbelungsschaufel 15 durch einen Sicherungsring 80 axial gehalten ist, der in den Umfang der Schaufelnabe 25 eingelassen ist. Der Radialvorsprung 79 bildet eine erste Axialsicherung 29 für die Verwirbelungsschaufel 15, und der Sicherungsring 80 eine zweite Axialsicherung 30.

Während Fig. 18 eine vergrößerte Darstellung der Verwirbelungsbeschaufelung 16 der Fig. 17 mit der wenigstens einen Verwirbelungsschaufel 15, der Schaufelnabe 25 und den Axialsicherungen 29, 30 erkennen lässt, zeigt Fig. 19 eine Draufsicht auf die Verwirbelungsbeschaufelung 16, und zwar aus Blickrichtung des in Fig. 18 dargestellten Pfeils P. Erkennbar in Fig. 19 ist die Aufnahme 78 für die Verwirbelungsschaufel 15, wobei die letztgenannte an ihrem radial inneren Ende über eine Umfangserweiterung 83 verfügt, die in eine entsprechend ausgeführte Umfangsaufweitung 84 der Schaufelnabe 25 eingreift, und dadurch als Radialsicherung 85 der Verwirbelungsschaufel 15 in der Aufnahme 78 sorgt.

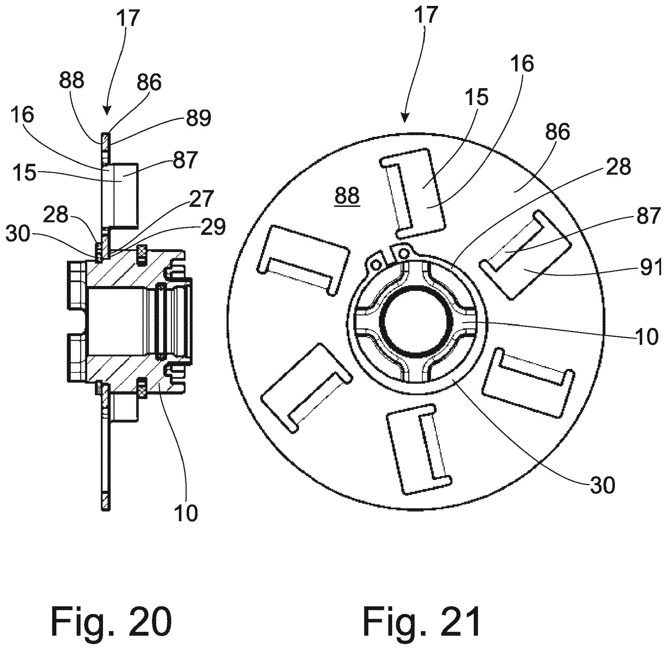

Die Fig. 20 und 21 zeigen eine Ausführung, bei welcher auf der Versorgungsnabe 10 ein Schaufelträger 86 befestigt ist, indem der Schaufelträger 86 mit einer Stirnseite 89 an einer als Axialsicherung 29 wirksamen Stufung 27 in Anlage kommt, und die andere Stirnseite 88 des Schaufelträgers 86 durch einen Sicherungsring 28 gehalten ist, der in den Umfang der Versorgungsnabe 10 eingelassen ist, und eine zweite Axialsicherung 30 bildet.

Der Schaufelträger 86 ist im Wesentlichen scheibenförmig ausgebildet, und verfügt in im Wesentlichen gleichen Umfangsabständen über eine Mehrzahl an Schaufelträgersegmenten 87. Diese Schaufelträgersegmente 87 sind durch fertigungstechnische Freistellung, beispielsweise durch Stanzen oder Schneiden, gegenüber dem restlichen Schaufelträger 86 herausgearbeitet, um anschließend, unter Belassung jeweils einer Aussparung 91 im Schaufelträger 86, aus der Erstreckungsebene der Stirnseiten 88 und 89 herausgebogen zu werden, beispielsweise in Richtung der abtriebsseitigen Stirnseite 89. Die Schaufelträgersegmente 87 können im Wesentlichen senkrecht umgebogen sein, oder aber in einem von der senkrechten abweichenden Neigungswinkel, und sie können in ihrer neuen Erstreckungsrichtung im Wesentlichen krümmungsfrei verlaufen, oder aber mit vorbestimmtem Krümmungsverlauf. Jedes der Schaufelträgersegmente 87 ist jeweils als Verwirbelungsschaufel 15 wirksam. Der Schaufelträger 86 ist demnach Teil einer Verwirbelungsbeschaufelung 16, und bildet demnach eine Verzögerungseinrichtung 17.

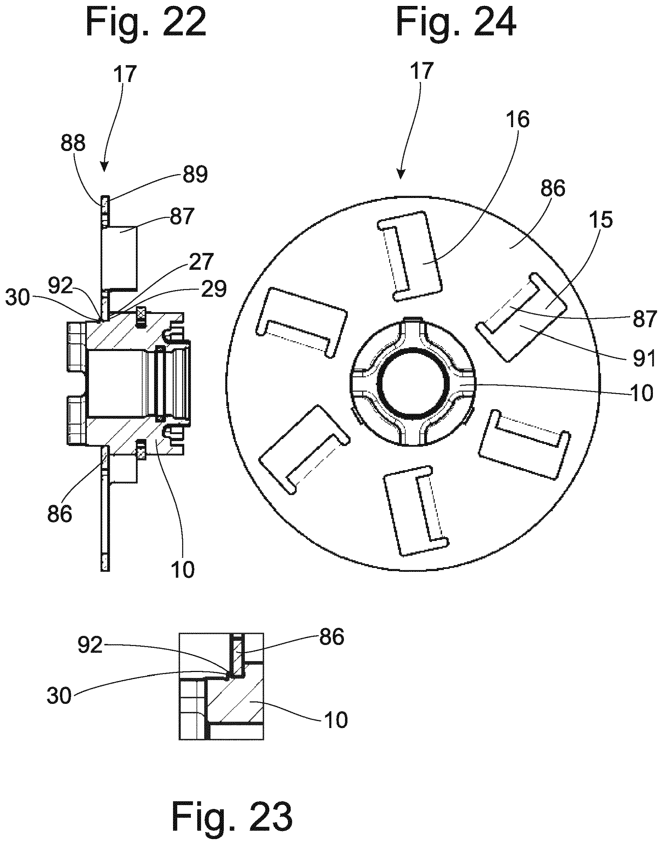

Der Schaufelträger 86 der Fig. 22 bis 24 entspricht im Wesentlichen dem zuvor beschriebenen Schaufelträger 86, und unterscheidet sich lediglich durch die Art der Befestigung des Schaufelträgers 86 an der Versorgungsnabe 10. Während der Schaufelträger 86 der Fig. 22 bis 24 mit seiner Stirnseite 89 an der als Axialsicherung 29 wirksamen Stufung 27 in Anlage kommt, wird die andere Stirnseite 88 des Schaufelträgers 86 durch eine in Fig. 23 vergrößert herausgezeichnete Verstemmung 92 gesichert, so dass die Verstemmung 92 als Axialsicherung 30 wirksam ist. Auch hier sind die am Schaufelträger 86 vorgesehenen Schaufelträgersegmente 87 als Verwirbelungsschaufeln 15 einer Verwirbelungsbeschaufelung 16 wirksam, und bilden eine Verzögerungseinrichtung 17.

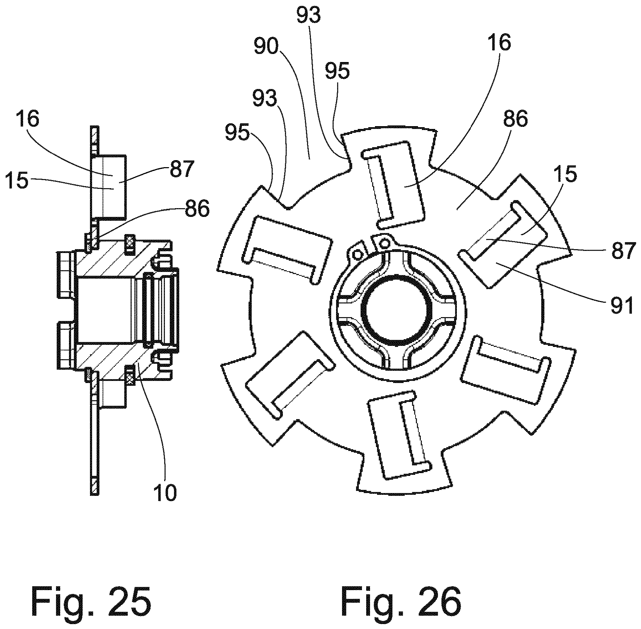

Die Fig. 25 und 26 zeigen den in Fig. 22 und 24 dargestellten Schaufelträger 86, jedoch mit Radialaussparungen 90 jeweils in Umfangsrichtung zwischen je zwei Radialvorsprüngen 95 mit Schaufelträgersegmenten 87. Hierdurch wird die Trägheit des Schaufelträgers 86 und damit der Verwirbelungsbeschaufelung 16 reduziert, und gleichzeitig werden zusätzliche Verzögerungsflächen 93 für eine Druckmittelströmung an den umfangsseitigen Kanten der an die jeweiligen Radialaussparungen 90 angrenzenden Radialvorsprüngen 95 geschaffen. Hierdurch wird also eine besonders vorteilhafte Ausführung der Verzögerungseinrichtung 17 gebildet.

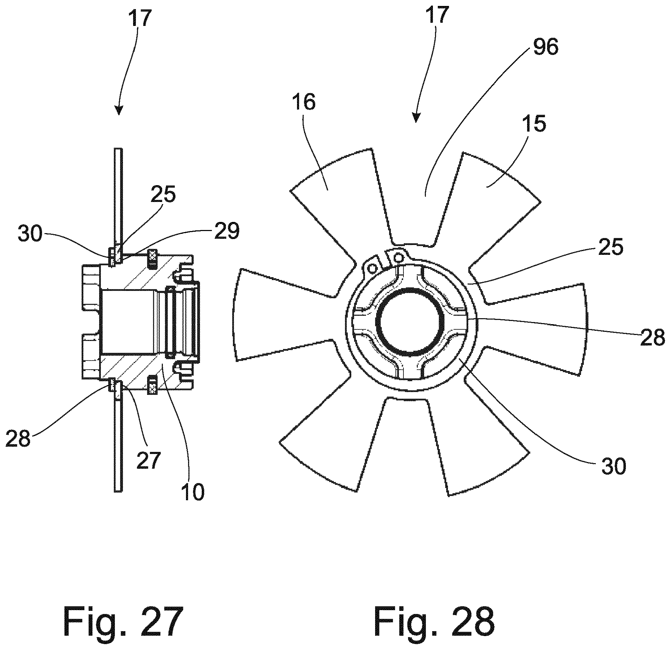

In den Fig. 27 und 28 ist eine Verzögerungseinrichtung 17 dargestellt, deren Schaufelnabe 25 axial gesichert auf der Versorgungsnabe 10 angeordnet ist, und zwar unter Verwendung von die Schaufelnabe 25 in fester axialer Anordnung gegenüber der Versorgungsnabe 10 haltenden Axialsicherungen 29, 30, von denen eine, nämlich die Axialsicherung 29, in bereits beschriebener Weise durch eine Stufung 27 an der Versorgungsnabe 10 und die andere, also die Axialsicherung 30, durch einen in die Versorgungsnabe 10 eingreifenden Sicherungsring 28 gebildet ist.

Ausgehend von der Schaufelnabe 25 erstrecken sich mit im Wesentlichen gleichen Umfangsabständen voneinander eine Mehrzahl von Verwirbelungsschaufeln 15 der Verwirbelungsbeschaufelung 16 nach radial außen. Die Verwirbelungsschaufeln 15 und die Schaufelnabe 25 verfügen, wie Fig. 27 zeigt, über die im Wesentlichen gleiche axiale Erstreckung, und sind einstückig miteinander ausgebildet. Insofern kann durchaus ein Schaufelträger, wie er in den Fig. 20 bis 26 mit der Bezugsziffer 86 behandelt ist, die Basis für die Herstellung der Verwirbelungsbeschaufelung 16 der Fig. 27 und 28 bilden. Es wären lediglich diejenigen Bereiche der Verwirbelungsbeschaufelung 16 herauszutrennen, die bei der fertiggestellten Verwirbelungsbeschaufelung 16 als Freistellungen 96 zwischen je zwei Verwirbelungsschaufeln 15 in Erscheinung treten.

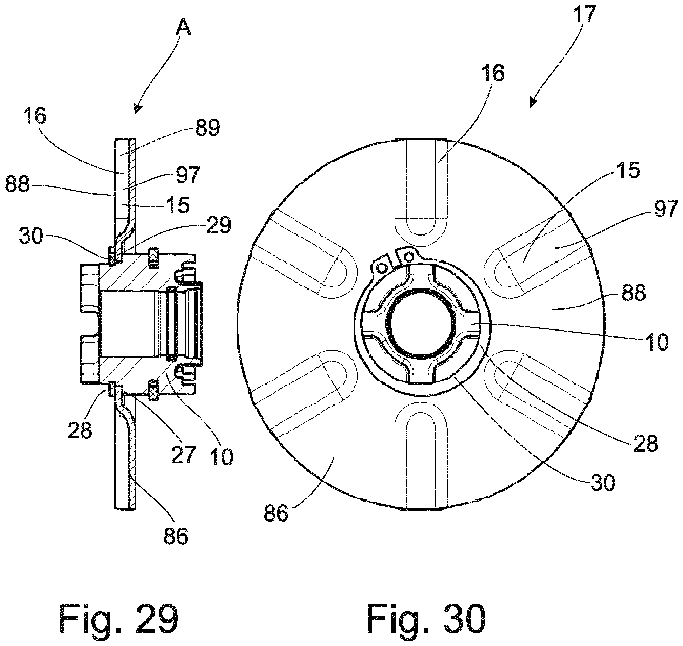

Auch die in Fig. 29 und 30 dargestellte Verzögerungseinrichtung 17 verfügt über einen Schaufelträger 86, der axial gesichert auf der Versorgungsnabe 10 angeordnet ist, und zwar unter Verwendung von den Schaufelträger 86 in fester axialer Anordnung gegenüber der Versorgungsnabe 10 haltenden Axialsicherungen 29, 30, von denen die Axialsicherung 29 durch eine Stufung 27 an der Versorgungsnabe 10 und die Axialsicherung 30 durch einen in die Versorgungsnabe 10 eingreifenden Sicherungsring 28 gebildet ist.

Charakteristisch bei diesem Schaufelträger 86 ist, dass, ausgehend von einer Stirnseite 88, plastische Ausformungen 97 gebildet werden, die über die andere Stirnseite 89 des Schaufelträgers 86 axial hinausragen, und als Verwirbelungsschaufeln 15 der Verwirbelungsbeschaufelung 16 Verwendung finden. Die plastischen Ausformungen 97 sind, bezogen auf den Umfang, im Wesentlichen in gleichen Abständen zueinander angeordnet.

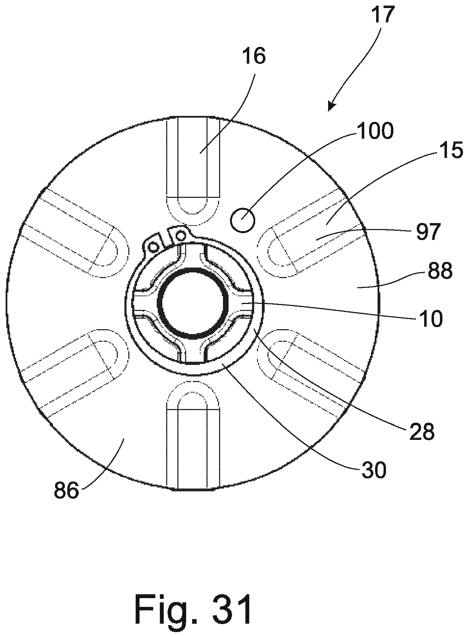

Anders als die in den Fig. 20 bis 28 behandelten Ausführungen ist die in Fig. 29 und 30 dargestellte Verzögerungseinrichtung 17 ohne Aussparungen oder Freistellungen ausgebildet. Ein auf der Stirnseite 88 anliegendes Druckniveau kann daher nicht unmittelbar zur Stirnseite 89 gelangen, sondern erst nach radialer Überwindung der Verwirbelungsbeschaufelung 16. Um dies zu vermeiden, kann gemäß Fig. 31 in Umfangsrichtung zumindest eine Ausgleichsöffnung 100 vorgesehen sein, welche die Verwirbelungsbeschaufelung 16 axial komplett durchdringt.

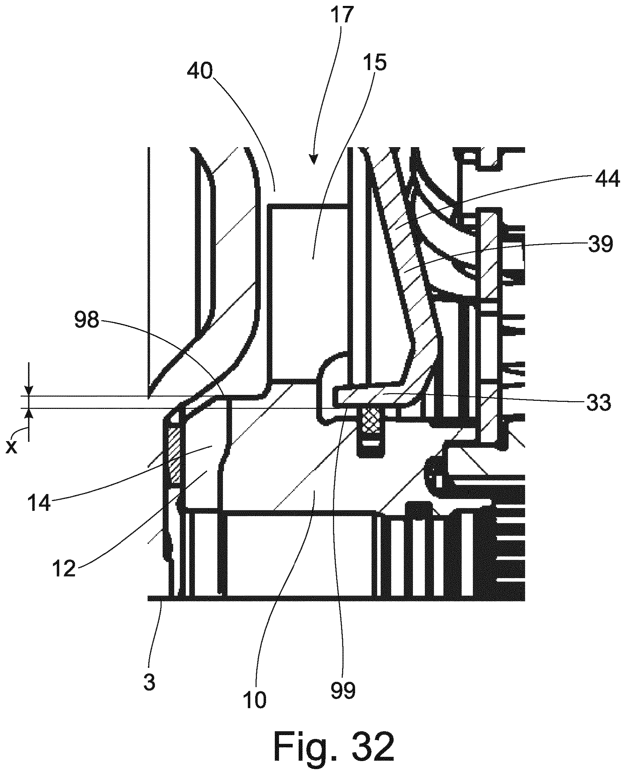

Fig. 32 zeigt eine Ausführung, die im Wesentlichen mit der Ausführung gemäß den Fig. 1 und 2 übereinstimmt, und somit eine Verzögerungseinrichtung 17 zeigt, bei welcher die Verwirbelungsschaufeln 15 der Verwirbelungsbeschaufelung 16 einstückig mit der Versorgungsnabe 10 ausgebildet sind. Abweichend von der Ausführung der Fig. 1 und 2 wird jetzt aber ein Durchlassbereich 12 mit Durchlässen 14 gezeigt, bei welchem die Durchlassmündungen 98, bezogen auf die Zentralachse 3, um eine Radialdistanz x weiter nach außen greifen als der radiale Innendurchmesser 99 der Kolbennabe 33 des Kolbens 39 der Kupplungsvorrichtung 44. Zugeführtes Druckmittel wird dadurch mit der Drehzahl der Verzögerungseinrichtung 17 in den Druckraum 40 gefördert, und dort durch die Verwirbelungsbeschaufelung 16 in dieser Wirkung unterstützt.

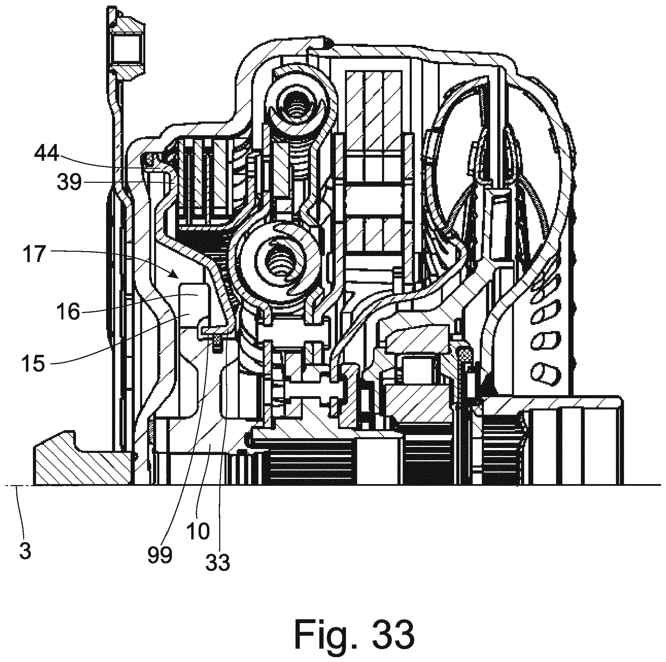

In Fig. 33 ist eine weitere Ausführung der Verzögerungseinrichtung 17 dargestellt, bei welcher die Verwirbelungsschaufeln 15 der Verwirbelungsbeschaufelung 16 einstückig mit der Versorgungsnabe 10 ausgebildet sind. Die Versorgungsnabe 10 ist allerdings, bezogen auf die Zentralachse 3, radial sehr weit nach außen gezogen. Entsprechend verfügt der Kolben 39 der Kupplungsvorrichtung 44 an seiner Kolbennabe 33 über einen großen Innendurchmesser 99, weist aber, da der Außendurchmesser des Kolbens 39 sich gegenüber den bislang beschriebenen Ausführungen im Wesentlichen nicht geändert hat, über eine radial kleine Erstreckung im Vergleich mit den Kolben 39 der bislang beschriebenen Ausführungen auf.

### Bezugszeichen

- 1: Kopplungsanordnung
- 2: hydrodynamischer Drehmomentwandler
- 3: Zentralachse
- 4: Gehäuse
- 5: Gehäusedeckel
- 6: Antriebsplatte
- 8: Pumpenrad
- 9: Turbinenrad
- 10: Versorgungsnabe
- 11: Abstandsring
- 12: Durchlassbereich
- 13: Befestigungselemente
- 14: Durchlass
- 15: Verwirbelungsschaufel
- 16: Verwirbelungsbeschaufelung
- 17: Verzögerungseinrichtung
- 18: Aufnahmebereich
- 19: Axialvorsprung
- 20: Durchgang
- 21: Verbindungsbereich
- 22: Abdichtung
- 23: Vertiefung
- 24: Abdichtung
- 25: Schaufelnabe
- 26: Aufnahme
- 27: Stufung
- 28: Sicherungsring
- 29: Axialsicherung
- 30: Axialsicherung
- 31: Abtriebsnabe
- 32: Innenverzahnung
- 33: Kolbennabe
- 34: Freilauf
- 35: abtriebsseitige Gehäusenabe
- 36: Leitrad
- 37: hydrodynamischer Kreis
- 39: Kolben
- 40: Druckraum
- 41: Torusraum
- 42: Kupplungselemente
- 43: Kupplungselemente
- 44: Kupplungsvorrichtung
- 45: Verzahnung
- 46: Innenkupplungselemententräger
- 47: Verzahnung
- 48: Eingang des Torsionsschwingungsdämpfers
- 50: Torsionsschwingungsdämpfer
- 51: radial äußere Nabenscheibe
- 52: radial äußere erste Dämpfereinheit
- 54: Deckblech
- 56: Deckblech
- 58: radial innere zweite Dämpfereinheit
- 60: Zwischenübertragungselemente
- 62: radial innere Nabenscheibe
- 63: Ausgang des Torsionsschwingungsdämpfers
- 64: antriebsseitiges Tilgermassen-Trägerelement
- 66: abtriebsseitiges Tilgermassen-Trägerelement
- 67: Tilgermassenträger
- 68: Tilgermassen
- 69: Tilgermassenelemente
- 70: Tilgersystem
- 71: erste Druckmittelleitung
- 72: zweite Druckmittelleitung
- 73: dritte Druckmittelleitung
- 74: Drucklager
- 75: Schwingungsdämpfungseinrichtung
- 76: Passage
- 77: Zentriersitz
- 78: Aufnahme
- 79: Radialvorsprung
- 80: Sicherungsring
- 81: Axialsicherung
- 82: Drehsicherung
- 83: Umfangserweiterung
- 84: Umfangsaufweitung
- 85: Radialsicherung
- 86: Schaufelträger
- 87: Schaufelträgersegment
- 88: Stirnseite Schaufelträger
- 89: Stirnseite Schaufelträger
- 90: Radialaussparung Schaufelträger
- 91: Aussparung
- 92: Verstemmung
- 93: Verzögerungsfläche
- 95: Radialvorsprung
- 96: Freistellungen
- 97: Ausformungen
- 98: Durchlassmündungen
- 99: Innendurchmesser der Kolbennabe
- 100: Ausgleichsöffnung

## Patentansprüche

1. Hydrodynamische Kopplungsanordnung (1) mit einem Gehäuse (4), welches an Druckmittelleitungen (71 bis 73) zur Ein- oder Ableitung von Druckmittel wenigstens in einen Druckraum (40) angeschlossen ist, der mittels eines Kolbens (39) einer Kupplungseinrichtung (44) gegenüber einem in dem Gehäuse (4) ebenfalls vorgesehenen Torusraum (41) eines hydrodynamischen Kreises (37) zumindest weitgehend abgedichtet ist, wobei zur axial verlagerbaren Aufnahme einer radial inneren Kolbennabe (33) des Kolbens (39) der Kupplungseinrichtung (44) ein relativ zum Gehäuse (4) drehbarer Aufnahmebereich (18) und zur Herstellung zumindest einer Strömungsverbindung zwischen wenigstens einer Druckmittelleitung (71) und dem Druckraum (40) zumindest ein relativ zum Gehäuse drehbarer Durchlass (14) in einem Durchlassbereich (12) vorgesehen ist, und der Aufnahmebereich (18) ebenso wie der Durchlassbereich (12) in Drehverbindung zu einer eine Strömung von Druckmittel im Druckraum (40) beeinflussenden Verzögerungseinrichtung (17) steht, wobei die Strömung des Druckmittels nach Durchgang durch den Durchlassbereich (12) in den Druckraum (40) gelangt, **dadurch gekennzeichnet, dass** die Verzögerungseinrichtung (17) über eine Verwirbelungsbeschaufelung (16) verfügt, die mit wenigstens einer Verwirbelungsschaufel (15) versehen ist, die zumindest im Wesentlichen über eine Erstreckung nach radial außen in den Druckraum (40) verfügt.

2. Hydrodynamische Kopplungsanordnung (1) nach Anspruch 1, **dadurch gekennzeichnet, dass** die wenigstens eine Verwirbelungsschaufel (15) der Verwirbelungsbeschaufelung (16) an einer Versorgungsnabe (10) oder an einer von der Versorgungsnabe (10) drehfest aufgenommenen Schaufelnabe (25) drehfest aufgenommen ist.

3. Hydrodynamische Kopplungsanordnung (1) nach Anspruch 2, **dadurch gekennzeichnet, dass** der Aufnahmebereich (18) und/oder der Durchlassbereich (12) an der Versorgungsnabe (10) oder an der Schaufelnabe (25) vorgesehen ist.

4. Hydrodynamische Kopplungsanordnung (1) nach Anspruch 1, **dadurch gekennzeichnet, dass** der Verwirbelungsbeschaufelung (16) in zueinander entgegengesetzten Richtungen wirksame Axialsicherungen (29, 30) für die wenigstens eine Verwirbelungsschaufel (15) zugeordnet sind.

5. Hydrodynamische Kopplungsanordnung (1) nach Anspruch 1 mit einer Zentralachse (3), um die das Gehäuse (4) drehbar ist, **dadurch gekennzeichnet, dass** die wenigstens eine Verwirbelungsschaufel (15) sich zumindest mit einer Komponente in Radialrichtung, also mit zumindest einer Komponente radial zur Zentralachse (3) und/oder mit zumindest einer Komponente in Achsrichtung, also in Verlaufsrichtung der Zentralachse (3), erstreckt.

6. Hydrodynamische Kopplungsanordnung (1) nach Anspruch 5, **dadurch gekennzeichnet, dass** die wenigstens eine Verwirbelungsschaufel (15) in Radialrichtung und/oder in Achsrichtung zumindest im Wesentlichen mit krümmungsfreiem Verlauf ausgebildet ist.

7. Hydrodynamische Kopplungsanordnung (1) nach Anspruch 6, **dadurch gekennzeichnet, dass** die wenigstens eine Verwirbelungsschaufel (15) mit Neigung in Radialrichtung ausgebildet ist.

8. Hydrodynamische Kopplungsanordnung (1) nach Anspruch 6, **dadurch gekennzeichnet, dass** die wenigstens eine Verwirbelungsschaufel (15) mit Neigung gegenüber der Achsrichtung angeordnet ist.

9. Hydrodynamische Kopplungsanordnung (1) nach Anspruch 5, **dadurch gekennzeichnet, dass** die wenigstens eine Verwirbelungsschaufel (16) in Radialrichtung und/oder in Achsrichtung mit krümmungsbehaftetem Verlauf ausgebildet ist.

10. Hydrodynamische Kopplungsanordnung (1) nach Anspruch 9, **dadurch gekennzeichnet, dass** die wenigstens eine Verwirbelungsschaufel (15) mit Neigung in Radialrichtung ausgebildet ist.

11. Hydrodynamische Kopplungsanordnung (1) nach Anspruch 9, **dadurch gekennzeichnet, dass** die wenigstens eine Verwirbelungsschaufel (15) mit Neigung gegenüber der Achsrichtung angeordnet ist.

12. Hydrodynamische Kopplungsanordnung (1) nach Anspruch 2, **dadurch gekennzeichnet, dass** die Verwirbelungsbeschaufelung (16) über einen Schaufelträger (86) verfügt, wobei zur Bildung der zumindest einen Verwirbelungsschaufel (15) wenigstens ein vom Schaufelträger (86) durch Freistellung gelöstes Schaufelträgersegment (87) mit zumindest einer Komponente in Achsrichtung gegenüber einer der Stirnseiten (88, 89) des Schaufelträgers (86) herausgestellt ist.

13. Hydrodynamische Kopplungsanordnung (1) nach Anspruch 12, **dadurch gekennzeichnet, dass** der Schaufelträger (86) in Umfangsrichtung jeweils angrenzend an ein Schaufelträgersegment (87) mit einer vom Umfangsbereich nach radial innen greifenden Radialaussparung (90) versehen ist.

14. Hydrodynamische Kopplungsanordnung (1) nach Anspruch 2, **dadurch gekennzeichnet, dass** die Verwirbelungsbeschaufelung (16) über einen Schaufelträger (86) verfügt, wobei zur Bildung der zumindest einen Verwirbelungsschaufel (15) wenigstens ein Schaufelträgersegment (87) mittels plastischer Ausformung des Schaufelträgers (86) gegenüber einer Stirnseite (89) von dessen Stirnseiten (88, 89) herausgestellt ist.

15. Hydrodynamische Kopplungsanordnung (1) nach Anspruch 14, **dadurch gekennzeichnet, dass** der Schaufelträger (86) der Verwirbelungsbeschaufelung (16) in Umfangsrichtung über zumindest eine Durchlassöffnung (100) verfügt, die sich axial zwischen den Stirnseiten (88, 89) der Verwirbelungsbeschaufelung (16) erstreckt.

16. Hydrodynamische Kopplungsanordnung (1) nach Anspruch 7, 12 oder 14, **dadurch gekennzeichnet, dass** die wenigstens eine Verwirbelungsschaufel (15) mit einer ihrer Drehrichtung entgegengesetzten Neigung oder mit einer ihrer Drehrichtung entsprechenden Neigung von der Radialrichtung abweicht.

17. Hydrodynamische Kopplungsanordnung (1) nach Anspruch 2, **dadurch gekennzeichnet, dass** die Schaufelnabe (25) der Verwirbelungsbeschaufelung (16) mit der wenigstens einen Verwirbelungsschaufel (15) einstückig ausgebildet ist.

18. Hydrodynamische Kopplungsanordnung (1) nach Anspruch 1, **dadurch gekennzeichnet, dass** die wenigstens eine Verwirbelungsschaufel (15) mit der Versorgungsnabe (10) einstückig ausgebildet ist.

19. Hydrodynamische Kopplungsanordnung (1) nach Anspruch 2, **dadurch gekennzeichnet, dass** an der Schaufelnabe (25) der Verwirbelungsbeschaufelung (16) wenigstens eine Verwirbelungsschaufel (15) befestigt ist.

20. Hydrodynamische Kopplungsanordnung (1) nach Anspruch 12 oder 14, **dadurch gekennzeichnet, dass** der Schaufelträger (86) an der Versorgungsnabe (10) befestigt ist.

21. Hydrodynamische Kopplungsanordnung (1) nach Anspruch 1 mit einer Zentralachse (3), um die das Gehäuse (4) drehbar ist, **dadurch gekennzeichnet, dass** wenigstens eine Durchlassmündung (98) zumindest eines Durchlasses (14) des Durchlassbereiches (12) in Bezug zur Zentralachse (3) radial weiter nach außen ragt als der den Aufnahmebereich (18) umschließende Innendurchmesser (99) der radial inneren Kolbennabe (33) des Kolbens (39).

## Claims

1. Hydrodynamic coupling arrangement (1) with a housing (4) which is connected to pressure medium lines (71 to 73) for the introduction or discharge of pressure medium at least into/out of a pressure space (40) which is at least largely sealed by means of a piston (39) of a clutch device (44) with respect to a toroidal space (41), likewise provided in the housing (4), of a hydrodynamic circuit (37), a receiving region (18) which is rotatable relative to the housing (4) being provided for axially movably receiving a radially inner piston boss (33) of the piston (39) of the clutch device (44), and at least one passage (14) which is rotatable relative to the housing being provided in a passage region (12) for establishing at least one flow connection between at least one pressure medium line (71) and the pressure space (40), and the receiving region (18), just like the passage region (12), being in a rotary connection with a retardation device (17) which influences a flow of pressure medium in the pressure space (40), the flow of the pressure medium passing, after passage through the passage region (12), into the pressure space (40), **characterized in that** the retardation device (17) has a turbulence blade system (16) which is provided with at least one turbulence blade (15) which at least substantially has an extent radially to the outside into the pressure space (40).

2. Hydrodynamic coupling arrangement (1) according to Claim 1, **characterized in that** the at least one turbulence blade (15) of the turbulence blade system (16) is received fixedly for conjoint rotation on a supply hub (10) or on a blade hub (25) which is received fixedly by the supply hub (10) for conjoint rotation.

3. Hydrodynamic coupling arrangement (1) according to Claim 2, **characterized in that** the receiving region (18) and/or the passage region (12) are/is provided on the supply hub (10) or on the blade hub (25).

4. Hydrodynamic coupling arrangement (1) according to Claim 1, **characterized in that** the turbulence blade system (16) is assigned axial securing means (29, 30) for the at least one turbulence blade (15) which act in mutually opposed directions.

5. Hydrodynamic coupling arrangement (1) according to Claim 1 with a central axis (3), about which the housing (4) is rotatable, **characterized in that** the at least one turbulence blade (15) extends at least with one component in the radial direction, that is to say with at least one component radially with respect to the central axis (3) and/or the at least one component in the axial direction, that is to say in the running direction of the central axis (3).

6. Hydrodynamic coupling arrangement (1) according to Claim 5, **characterized in that** the at least one turbulence blade (15) is configured at least substantially with a curvature-free course in the radial direction and/or in the axial direction.

7. Hydrodynamic coupling arrangement (1) according to Claim 6, **characterized in that** the at least one turbulence blade (15) is configured with an inclination in the radial direction.

8. Hydrodynamic coupling arrangement (1) according to Claim 6, **characterized in that** the at least one turbulence blade (15) is arranged with an inclination with respect to the axial direction.

9. Hydrodynamic coupling arrangement (1) according to Claim 5, **characterized in that** the at least one turbulence blade (16) is configured with a curved course in the radial direction and/or in the axial direction.

10. Hydrodynamic coupling arrangement (1) according to Claim 9, **characterized in that** the at least one turbulence blade (15) is configured with an inclination in the radial direction.

11. Hydrodynamic coupling arrangement (1) according to Claim 9, **characterized in that** the at least one turbulence blade (15) is arranged with an inclination with respect to the axial direction.

12. Hydrodynamic coupling arrangement (1) according to Claim 2, **characterized in that** the turbulence blade system (16) has a blade carrier (86), at least one blade carrier segment (87) which is released from the blade carrier (86) by way of cutting out being cut out with at least one component in the axial direction with respect to one of the end sides (88, 89) of the blade carrier (86) in order to form the at least one turbulence blade (15) .

13. Hydrodynamic coupling arrangement (1) according to Claim 12, **characterized in that** the blade carrier (86) is provided, in each case adjacently in the circumferential direction to a blade carrier segment (87), with a radial cut-out (90) which reaches radially inwards from the circumferential region.

14. Hydrodynamic coupling arrangement (1) according to Claim 2, **characterized in that** the turbulence blade system (16) has a blade carrier (86), at least one blade carrier segment (87) being cut out from its end sides (88, 89) by means of plastic shaped-out moulding of the blade carrier (86) with respect to an end side (89) in order to form the at least one turbulence blade (15).

15. Hydrodynamic coupling arrangement (1) according to Claim 14, **characterized in that** the blade carrier (86) of the turbulence blade system (16) has, in the circumferential direction, at least one passage opening (100) which extends axially between the end sides (88, 89) of the turbulence blade system (16).

16. Hydrodynamic coupling arrangement (1) according to Claim 7, 12 or 14, **characterized in that** the at least one turbulence blade (15) deviates from the radial direction with an inclination which is opposed to its rotational direction or with an inclination which corresponds to its rotational direction.

17. Hydrodynamic coupling arrangement (1) according to Claim 2, **characterized in that** the blade hub (25) of the turbulence blade system (16) is configured in one piece with the at least one turbulence blade (15).

18. Hydrodynamic coupling arrangement (1) according to Claim 1, **characterized in that** the at least one turbulence blade (15) is configured in one piece with the supply hub (10).

19. Hydrodynamic coupling arrangement (1) according to Claim 2, **characterized in that** at least one turbulence blade (15) is fastened to the blade hub (25) of the turbulence blade system (16).

20. Hydrodynamic coupling arrangement (1) according to Claim 12 or 14, **characterized in that** the blade carrier (86) is fastened to the supply hub (10).

21. Hydrodynamic coupling arrangement (1) according to Claim 1 with a central axis (3), about which the housing (4) is rotatable, **characterized in that** at least one passage orifice (98) of at least one passage (14) of the passage region (12) protrudes radially further outwards in relation to the central axis (3) than that internal diameter (99) of the radially inner piston hub (33) of the piston (39) which encloses the receiving region (18).

## Revendications

1. Agencement de couplage hydrodynamique (1) comportant un boîtier (4), lequel est raccordé à des conduites de fluide sous pression (71 à 73) pour introduire ou évacuer du fluide sous pression au moins dans un espace de pression (40) qui est étanchéifié au moins dans une large mesure au moyen d'un piston (39) d'un dispositif d'accouplement (44) par rapport à un espace toroïdal (41) d'un circuit hydrodynamique (37), lequel espace toroïdal est également prévu dans le boîtier (4), une région de logement (18) pouvant tourner par rapport au boîtier (4) étant prévue pour le logement déplaçable axialement d'un moyeu (33) radialement intérieur du piston (39) du dispositif d'accouplement (44) et au moins un passage (14) pouvant tourner par rapport au boîtier étant prévu dans une région de passage (12) pour l'établissement d'au moins une liaison fluidique entre au moins une conduite de fluide sous pression (71) et l'espace de pression (40), et la région de logement (18) tout comme la région de passage (12) étant en liaison rotative avec un dispositif de retardement (17) influençant un écoulement de fluide sous pression dans l'espace de pression (40), l'écoulement du fluide sous pression parvenant dans l'espace de pression (40) après le passage à travers la région de passage (12), **caractérisé en ce que** le dispositif de retardement (17) présente un aubage de tourbillonnement (16) qui est doté d'au moins une aube de tourbillonnement (15) qui présente au moins sensiblement une étendue radialement vers l'extérieur dans l'espace de pression (40).

2. Agencement de couplage hydrodynamique (1) selon la revendication 1, **caractérisé en ce que** l'au moins une aube de tourbillonnement (15) de l'aubage de tourbillonnement (16) est logée de manière solidaire en rotation sur un moyeu d'alimentation (10) ou sur un moyeu d'aube (25) logé de manière solidaire en rotation par le moyeu d'alimentation (10).

3. Agencement de couplage hydrodynamique (1) selon la revendication 2, **caractérisé en ce que** la région de logement (18) et/ou la région du passage (12) est/sont prévue(s) au niveau du moyeu d'alimentation (10) ou au niveau du moyeu d'aube (25).

4. Agencement de couplage hydrodynamique (1) selon la revendication 1, **caractérisé en ce que** des fixations axiales (29, 30), actives dans des sens opposés l'un à l'autre, pour l'au moins une aube de tourbillonnement (15) sont associées à l'aubage de tourbillonnement (16).

5. Agencement de couplage hydrodynamique (1) selon la revendication 1 présentant un axe central (3) autour duquel le boîtier (4) peut tourner, **caractérisé en ce que** l'au moins une aube de tourbillonnement (15) s'étend au moins avec une composante dans la direction radiale, c'est-à-dire avec au moins une composante radiale par rapport à l'axe central (3) et/ou avec au moins une composante dans la direction axiale, c'est-à-dire dans la direction d'étendue de l'axe central (3).

6. Agencement de couplage hydrodynamique (1) selon la revendication 5, **caractérisé en ce que** l'au moins une aube de tourbillonnement (15) est formée dans la direction radiale et/ou dans la direction axiale au moins sensiblement sans courbure.

7. Agencement de couplage hydrodynamique (1) selon la revendication 6, **caractérisé en ce que** l'au moins une aube de tourbillonnement (15) est formée de manière à être inclinée dans la direction radiale.

8. Agencement de couplage hydrodynamique (1) selon la revendication 6, **caractérisé en ce que** l'au moins une aube de tourbillonnement (15) est disposée de manière à être inclinée par rapport à la direction axiale.

9. Agencement de couplage hydrodynamique (1) selon la revendication 5, **caractérisé en ce que** l'au moins une aube de tourbillonnement (16) est formée dans la direction radiale et/ou dans la direction axiale avec une allure courbe.

10. Agencement de couplage hydrodynamique (1) selon la revendication 9, **caractérisé en ce que** l'au moins une aube de tourbillonnement (15) est formée de manière à être inclinée dans la direction radiale.

11. Agencement de couplage hydrodynamique (1) selon la revendication 9, **caractérisé en ce que** l'au moins une aube de tourbillonnement (15) est disposée de manière à être inclinée par rapport à la direction axiale.

12. Agencement de couplage hydrodynamique (1) selon la revendication 2, **caractérisé en ce que** l'aubage de tourbillonnement (16) présente un support d'aube (86), au moins un segment de support d'aube (87) séparé du support d'aube (86) par dégagement ressortant avec au moins une composante dans la direction axiale par rapport à l'un des côtés frontaux (88, 89) du support d'aube (86) pour la formation de l'au moins une aube de tourbillonnement (15).

13. Agencement de couplage hydrodynamique (1) selon la revendication 12, **caractérisé en ce que** le support d'aube (86) est doté d'un évidement radial (90) venant en prise radialement vers l'intérieur à partir de la région périphérique de manière respectivement adjacente à un segment de support d'aube (87) dans la direction périphérique.

14. Agencement de couplage hydrodynamique (1) selon la revendication 2, **caractérisé en ce que** l'aubage de tourbillonnement (16) présente un support d'aube (86), au moins un segment de support d'aube (87) ressortant de ses côtés frontaux (88, 89) par déformation plastique du support d'aube (86) par rapport à un côté frontal (89) pour la formation de l'au moins une aube de tourbillonnement (15).

15. Agencement de couplage hydrodynamique (1) selon la revendication 14, **caractérisé en ce que** le support d'aube (86) de l'aubage de tourbillonnement (16) présente au moins une ouverture de passage (100) dans la direction périphérique, laquelle ouverture s'étend axialement entre les côtés frontaux (88, 89) de l'aubage de tourbillonnement (16).

16. Agencement de couplage hydrodynamique (1) selon la revendication 7, 12 ou 14, **caractérisé en ce que** l'au moins une aube de tourbillonnement (15) s'écarte de la direction radiale avec une inclinaison opposée à son sens de rotation ou avec une inclinaison correspondant à son sens de rotation.

17. Agencement de couplage hydrodynamique (1) selon la revendication 2, **caractérisé en ce que** le moyeu d'aube (25) de l'aubage de tourbillonnement (16) est formé d'une seule pièce avec l'au moins une aube de tourbillonnement (15) .

18. Agencement de couplage hydrodynamique (1) selon la revendication 1, **caractérisé en ce que** l'au moins une aube de tourbillonnement (15) est formée d'une seule pièce avec le moyeu d'alimentation (10).

19. Agencement de couplage hydrodynamique (1) selon la revendication 2, **caractérisé en ce qu'**au moins une aube de tourbillonnement (15) est fixée au moyeu d'aube (25) de l'aubage de tourbillonnement (16).

20. Agencement de couplage hydrodynamique (1) selon la revendication 12 ou 14, **caractérisé en ce que** le support d'aube (86) est fixé au moyeu d'alimentation (10).

21. Agencement de couplage hydrodynamique (1) selon la revendication 1 présentant un axe central (3) autour duquel le boîtier (4) peut tourner, **caractérisé en ce qu'**au moins un débouché (98) d'au moins un passage (14) de la région de passage (12) fait saillie radialement plus vers l'extérieur par rapport à l'axe central (3) que le diamètre intérieur (99), entourant la région de logement (18), du moyeu (33) radialement intérieur du piston (39).
